# EUROPEAN PATENT APPLICATION

(11) **EP 4 530 846 A1**
(43) Date of publication of application: **02.04.2025**
(21) Application number: 24194693.8
(22) Date of filing: 15.08.2024
(51) Int. Cl.: G06F 9/50

(54) **QUALITY OF SERVICE SUPPORT FOR INPUT/OUTPUT AND OTHER AGENTS**

(30) Priority: 26.09.2023 US 202363585524 P; 30.12.2023 US 202318401399
(71) Applicant: INTEL Corporation, Santa Clara, CA 95054 (US)
(72) Inventor: Herdrich, Andrew J., Hillsboro, 97123 (US); Joe, Daniel, Sacramento, 95835 (US); Schmole, Filip, Portland, 97214 (US); Abraham, Philip, Beaverton, 97006 (US); Van Doren, Stephen R., Portland, 97229 (US); Autee, Priya, Chandler, 85248 (US); Sankaran, Rajesh M., Portland, 97229 (US); Luck, Anthony, San Jose, 95112 (US); Lantz, Philip, Cornelius, 97113 (US); Wehage, Eric, Tenino, 98589 (US); Verplanke, Edwin, Chandler, 85226 (US); Coleman, James, Mesa, 85203 (US); Oehrlein, Scott, Gilbert, 85295 (US); Lee, David M., Portland, 97229 (US); Albion, Lee, Coeur d'Alene, 83815 (US); Harriman, David, Portland, 97210 (US); Mathew Abraham, Vinit, Hillsboro, 97124 (US); Liu, Yi-Feng, Chandler, 85286 (US); Peddireddy, Manjula, Santa Clara, 95054 (US); Blankenship, Robert G., Tacoma, 98407 (US)
(74) Representative: Goddar, Heinz J.

(57) **Abstract**

Techniques for quality of service (QoS) support for input/output devices and other agents are described. In embodiments, a processing device includes execution circuitry to execute a plurality of software threads; hardware to control monitoring or allocating, among the plurality of software threads, one or more shared resources; and configuration storage to enable the monitoring or allocating of the one or more shared resources among the plurality of software threads and one or more channels through which one or more devices are to be connected to the one or more shared resources.

## Description

### BACKGROUND

On computers and other information processing systems, various techniques may be used to provide various levels of quality of service (QoS) to clients, applications, etc. For example, processor cores in multicore processors may use shared system resources such as caches (e.g., a last level cache or LLC), system memory, input/output (I/O) devices, and interconnects. The QoS provided to applications may be degraded and/or unpredictable due to contention for these or other shared resources. Some processors include technologies, such as Resource Director Technology (RDT) from Intel^{®} Corporation, which enable visibility into and/or control over how shared resources such as LLC and memory bandwidth are being used. Such technologies may be useful, for example, for controlling applications that may be over-utilizing memory bandwidth relative to their priority.

### BRIEF DESCRIPTION OF DRAWINGS

Various examples in accordance with the present disclosure will be described with reference to the drawings, in which:
FIG. 1 illustrates a processor supporting input/output (I/O) agent quality of service (QoS) capabilities according to embodiments.
Figure 2A illustrates a system including an I/O memory management unit (IOMMU) according to an IOMMU-based tagging approach to I/O QoS.
Figure 2B illustrates an embodiment including central processing unit (CPU) agents and non-CPU agents connected through a fabric.
Figure 2C illustrates a non-CPU agent QoS feature enable register according to an embodiment.
Figure 2D shows device tagging with resource monitoring identifiers (RMIDs) and/or class of service (CLOS) according to an embodiment.
Figure 2E shows an I/O architecture according to an embodiment.
Figure 2F shows a system in which an I/O block includes a mapping table to map RMIDs and CLOS values, for I/O traffic over an interconnect, to channels mapped to devices according to an embodiment.
Figure 2G shows a mask used for controlling I/O QoS according to embodiments.
Figures 2H, 2I, 2J, 2K, 2L, 2M, and 2N show architectural models for I/O QoS control according to embodiments.
Figures 2O, 2P, and 2Q shows programming interfaces for I/O QoS according to embodiments.
Figures 3A, 3B, 3C, and 3D show examples of Advanced Configuration and Power Interface (ACPI) mappings for I/O QoS according to embodiments.
Figures 3E, 3F, 3G, 3H, and 3I show examples of tables for ACPI-based I/O QoS according to embodiments.
FIG. 4 illustrates an example computing system.
FIG. 5 illustrates a block diagram of an example processor and/or System on a Chip (SoC) that may have one or more cores and an integrated memory controller.
FIG. 6A is a block diagram illustrating both an example in-order pipeline and an example register renaming, out-of-order issue/execution pipeline according to examples.
FIG. 6B is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for input/output (I/O) agent and other agent translation quality of service (QoS) support. According to some examples, an apparatus includes an input/output agent and a processor core to provide a quality of service feature for use by the input/output agent.

As mentioned in the background section, a processor may include technologies, such as Resource Director Technology (RDT) from Intel^{®} Corporation, that enable visibility into and/or control over how shared resources such as LLC and memory bandwidth are being used. Aspects, implementations, and/or techniques related to such technologies that relate to monitoring, measuring, estimating, tracking, etc. memory bandwidth use may be referred to as "memory bandwidth monitoring" or "MBM" (which may also be used to refer to a memory bandwidth monitor, hardware/firmware/software to perform memory bandwidth monitoring, etc.), however, embodiments are not limited by the use of that term. Aspects, implementations, and/or techniques related to such technologies that relate to allocating, limiting, throttling, providing availability of, etc. memory bandwidth may be referred to as "memory bandwidth allocation" or "MBA" (which may also be used to refer to a quantity of memory bandwidth allocated, provided available, to be allocated, etc.) however, embodiments are not limited by the use of that term.

Also or instead, a processor or execution core in an information processing system may support a cache allocation technology including cache capacity bitmasks. For example, the Intel^{®} RDT feature set provides a set of allocation (resource control) capabilities including Cache Allocation Technology (CAT) supported by various levels of cache including level 2 (L2) and level 3 (L3) caches. CAT enables an OS, hypervisor, VMM, or similar system service management agent to specify the amount of cache space into which an application can fill, by programming Cache Capacity Bitmasks (CBMs).

Embodiments may include techniques, implemented in hardware (e.g., in circuitry, in silicon, etc.), involving QoS support for I/O agents and other agents. Use of embodiments may be desired to provide visibility and/or control over shared resource utilization by I/O devices such as Peripheral Component Interconnect Express (PCIe) and Compute Express Link (CXL) devices, with new capabilities to enable monitoring/control over usage by any agent in the system using such shared resources.

For convenience, embodiments described below may refer to an agent as an I/O agent, but any such reference to an I/O agent may mean any agent (e.g., I/O devices, integrated accelerators, CXL devices, field-programmable gate arrays (FPGAs), storage devices, agents other than central processing units (non-CPU agents), etc.). Any or all of these techniques may be referred to for convenience, as I/O QoS, IO QoS, non-CPU agent QoS, I/O RDT, IO RDT, non-CPU agent RDT, etc., but embodiments are not limited to I/O devices or RDT.

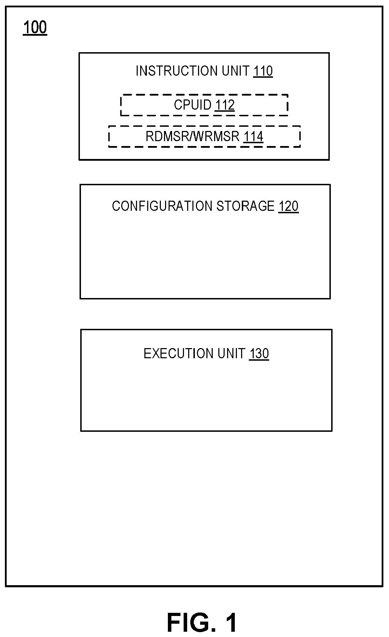

Figure 1 illustrates a processor supporting input/output (I/O) agent quality of service (QoS) capabilities, as further described below, according to embodiments. I/O QoS, according to embodiments, may be implemented in a processor, processor core, execution core, etc. which may be any type of processor/core, including a general-purpose microprocessor/core, such as a processor/core in the Intel^{®} Core^{®} Processor Family or other processor family from Intel^{®} Corporation or another company, a special purpose processor or microcontroller, or any other device or component in an information processing system in which an embodiment may be implemented.

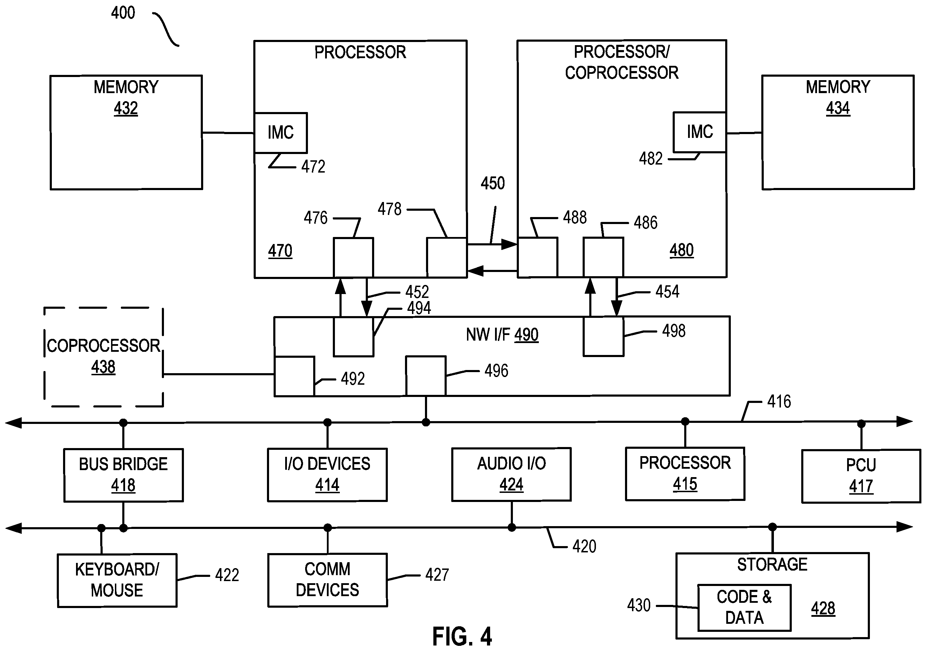

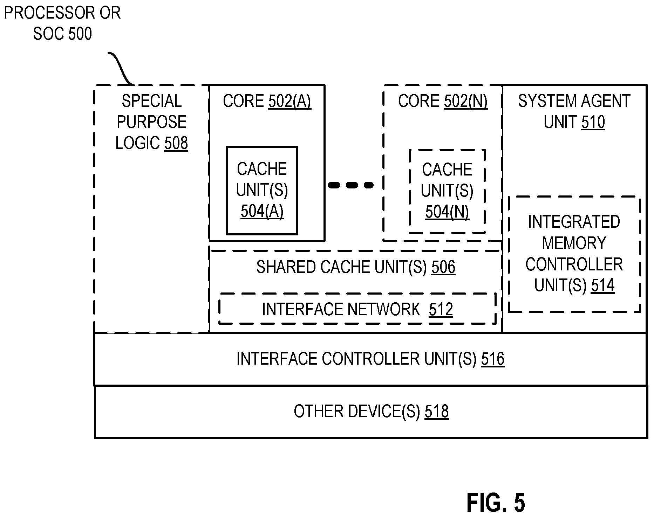

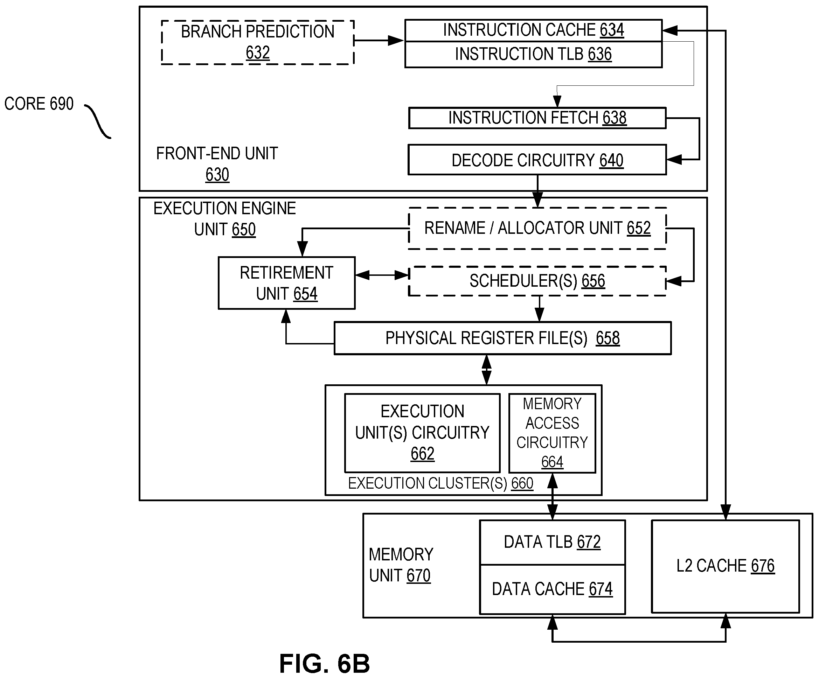

For example, Figure 1 illustrates a processor or processor core 100 (which may represent any of processors 470, 480, or 415 in system 400 in Figure 4, processor 500 or one of cores 502A to 502N in Figure 5, and/or core 690 in Figure 6B) supporting I/O QoS capabilities according to an embodiment. For convenience and/or examples, some features (e.g., instructions, registers, etc.) may be referred to by a name associated with a specific processor architecture (e.g., Intel^{®} 64 and/or IA32), but embodiments are not limited to those features, names, architectures, etc.

As shown, processor 100 includes instruction unit 110, configuration storage (e.g., model or machine specific registers (MSRs)) 120, execution unit(s) 130, and any other elements not shown.

Instruction unit 110 may correspond to and/or be implemented/included in front-end unit 630 in Figure 6B, as described below, and/or may include any circuitry, logic gates, structures, and/or other hardware, such as an instruction decoder, to fetch, receive, decode, interpret, schedule, and/or handle instructions or programming mechanisms, such as a processor identification instruction (e.g., CPUID as described below and represented as block 112) or otherwise (e.g., via Advanced Configuration and Power Interface or ACPI), and one or more read or write instructions (e.g., RDMSR/WRMSR as described below and represented as block 114) or otherwise (e.g., via a memory mapped I/O (MMIO) interface), to be executed and/or processed by processor 100. In Figure 1, instructions that may be decoded or otherwise handled by instruction unit 110 are represented as blocks with broken line borders because these instructions are not themselves hardware, but rather that instruction unit 110 may include hardware or logic capable of decoding or otherwise handling these instructions.

Any instruction format may be used in embodiments; for example, an instruction may include an opcode and one or more operands, where the opcode may be decoded into one or more micro-instructions or micro-operations for execution by an execution unit. Operands or other parameters may be associated with an instruction implicitly, directly, indirectly, or according to any other approach.

Configuration storage 120 may include any one or more MSRs or other registers or storage locations, one or more of which may be in a core, one or more of which may be within a core or outside of a core (e.g., in an uncore, system agent, etc.) to control processor features, control and report on processor performance, handle system related functions, etc. In various embodiments, one or more of these registers or storage locations may or may not be accessible to application and/or user-level software, may be written to or programmed by software, a basic input/output system (BIOS), etc.

In embodiments, the instruction set of processor 100 may include instructions to access (e.g., read and/or write) MSRs or other storage, such as an instruction to read from or write to an MSR (RDMSR, WRMSR) and/or instructions to read or write to or program other registers or storage locations, including via MMIO.

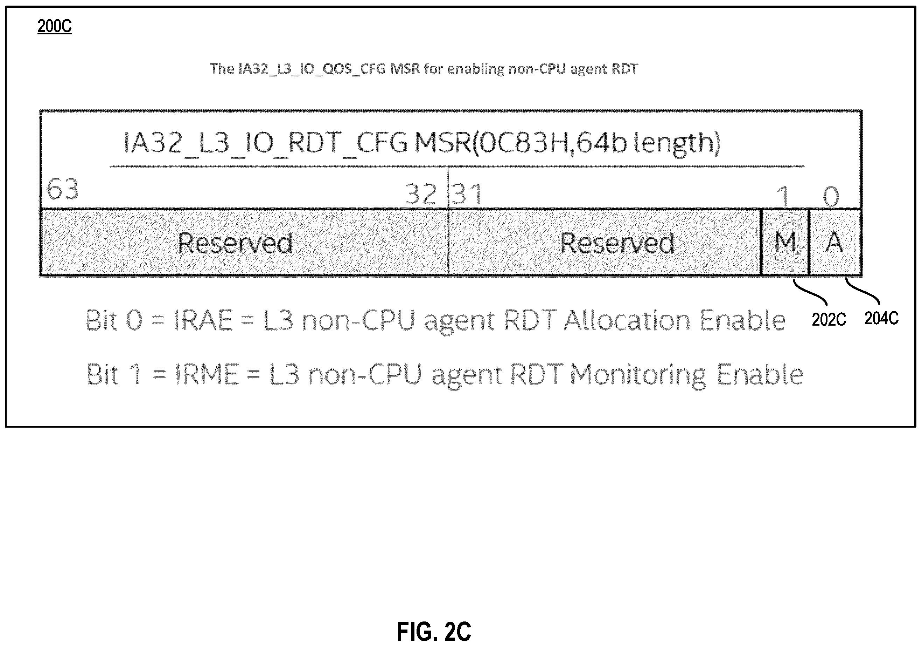

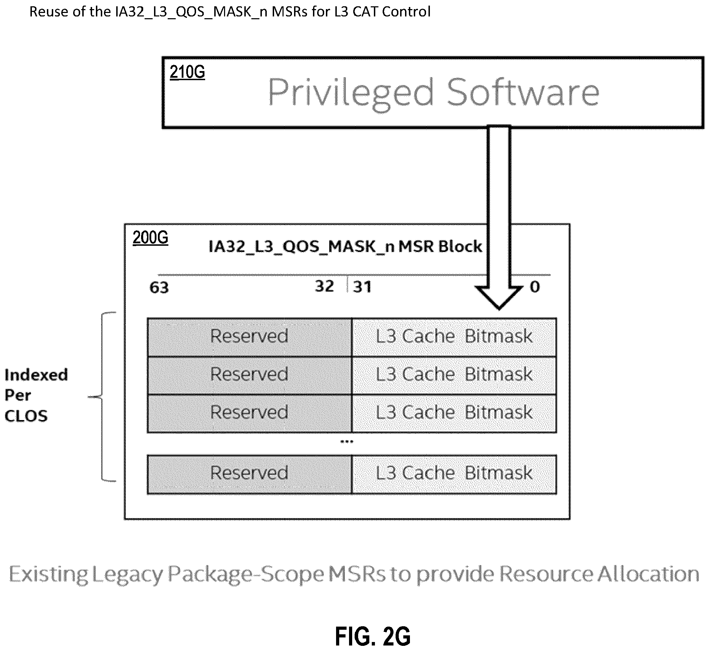

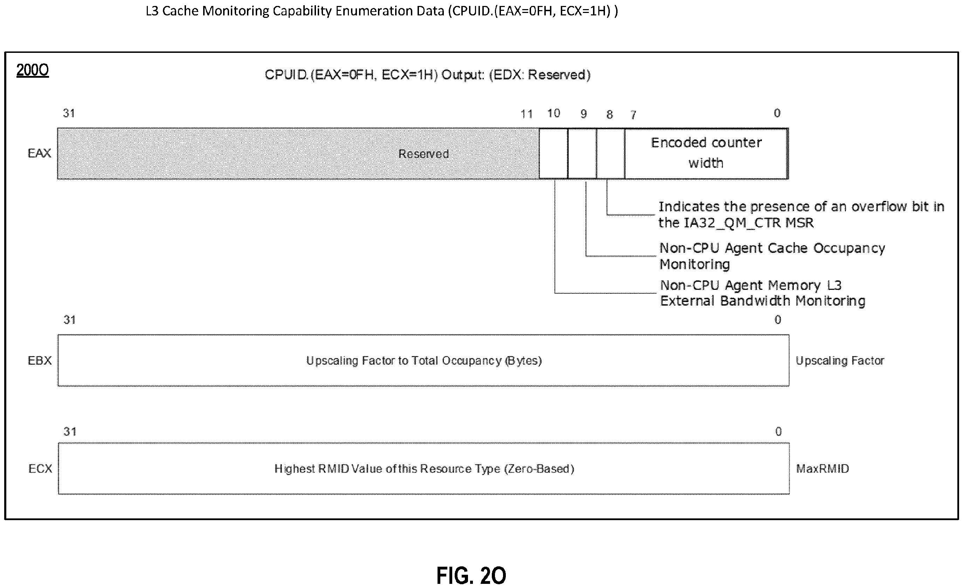

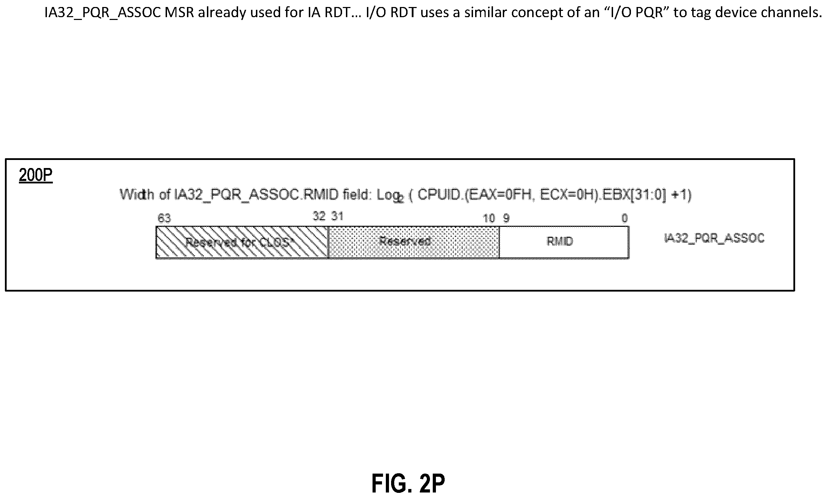

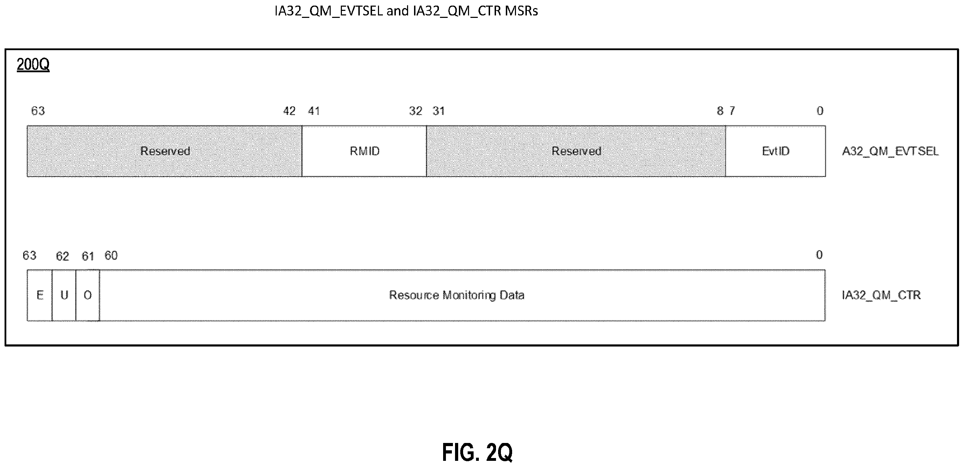

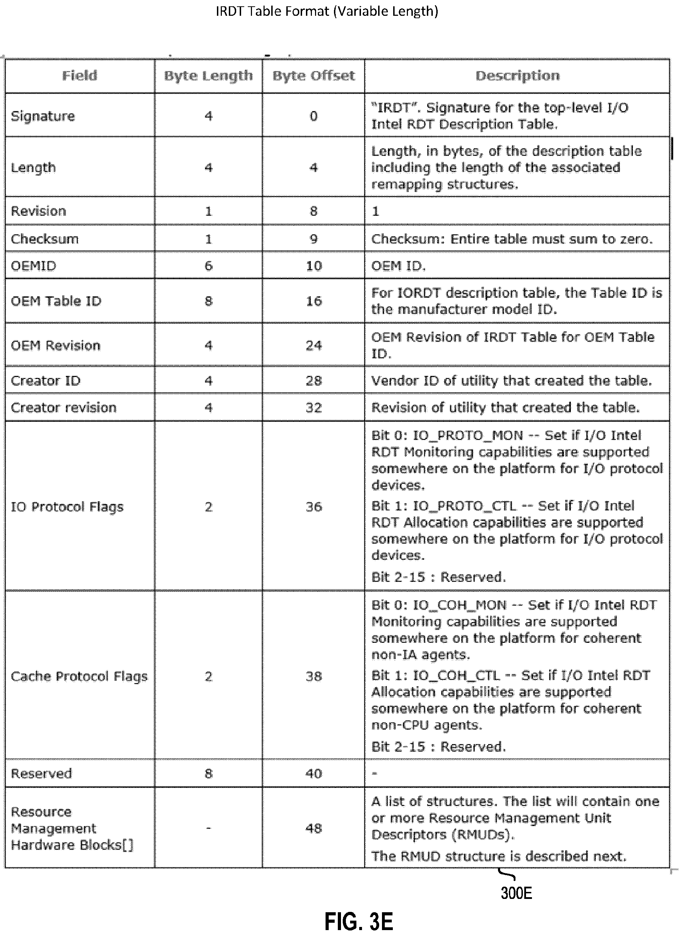

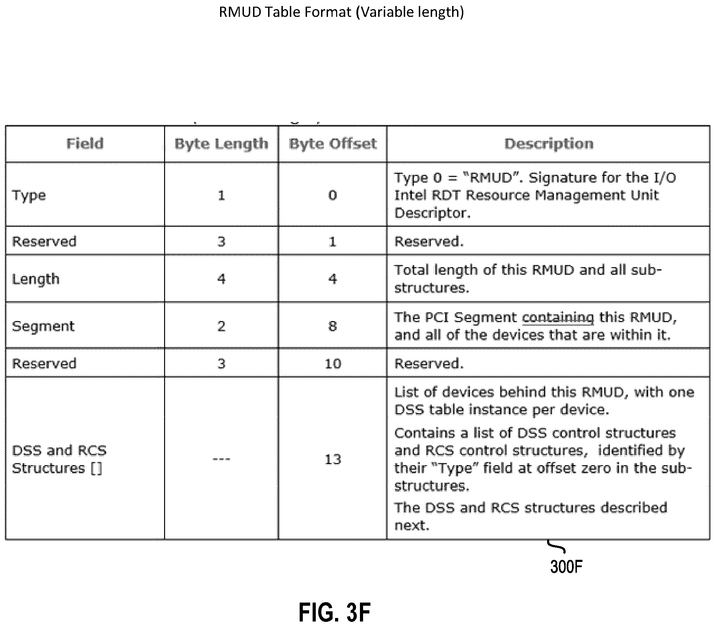

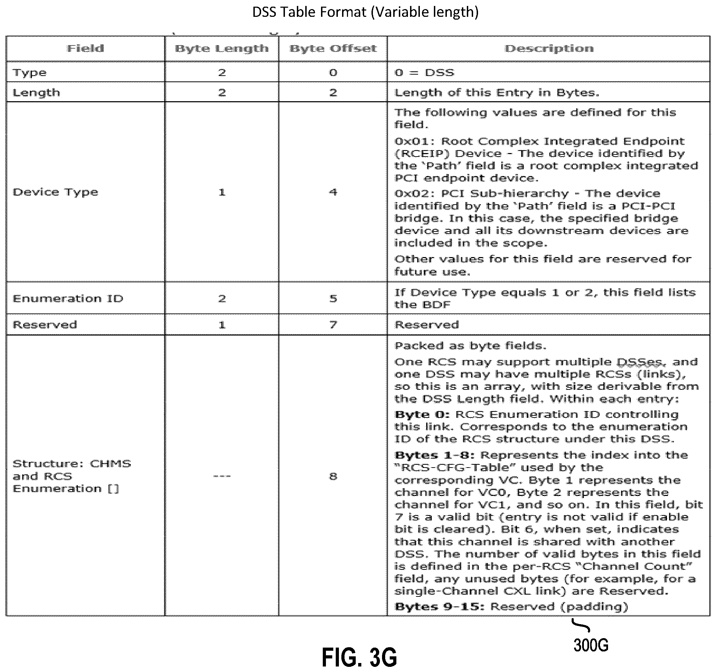

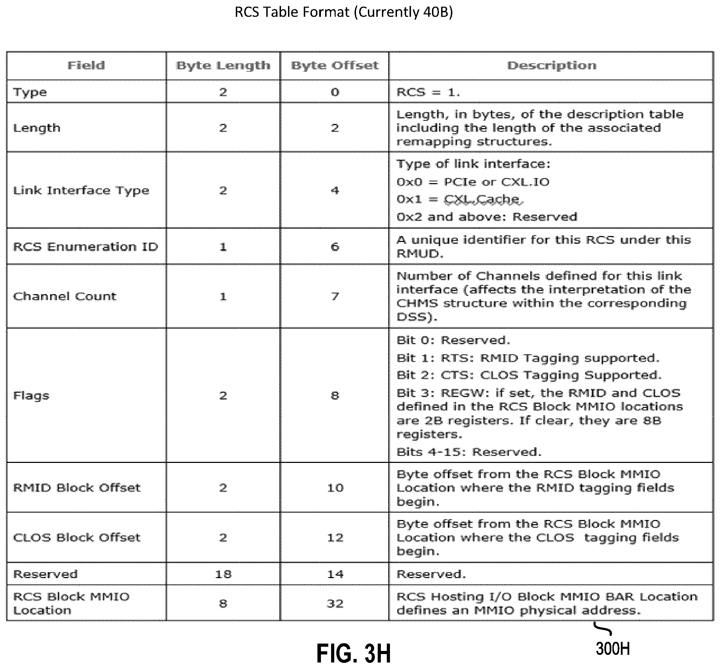

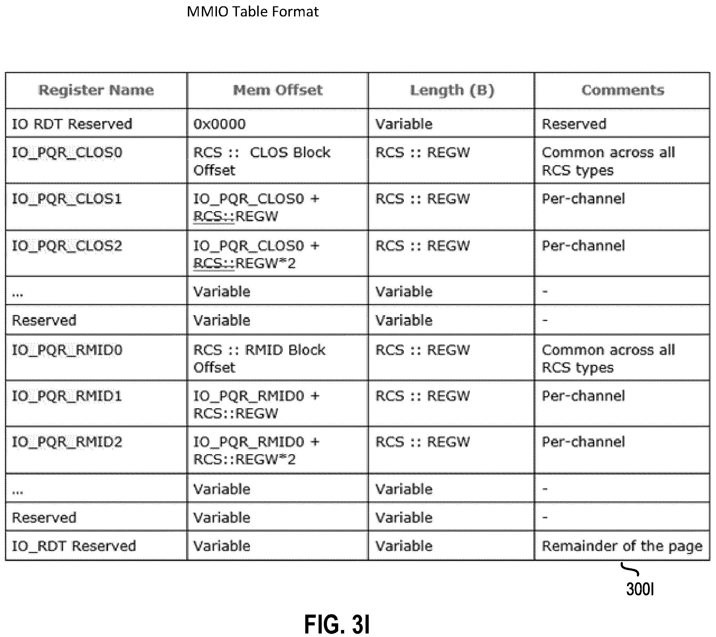

In embodiments, configuration storage 120 may include one or more MSRs, fields or portions of MSRs, or other programmable storage locations, such as those described below and/or shown in Figures 2C, 2G, 2O, 2P, 2Q, 3E, 3F, 3G, 3H, 3I, etc. Processor 100 may also include a mechanism to indicate support for and enumeration of capabilities according to embodiments. For example, in response to an instruction (e.g., in an Intel^{®} x86 processor, a CPUID instruction, one or more processor registers (e.g., EAX, EBX, ECX, EDX) may return information to indicate whether, to what extent, how, etc. capabilities according to embodiments are supported.

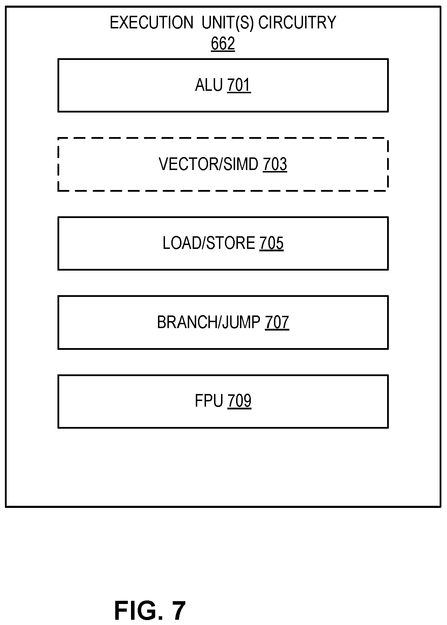

Execution unit(s) 130 may correspond to and/or be implemented/included in execution engine 650 in Figure 6B or execution unit circuitry 662 in Figure 7 as described below.

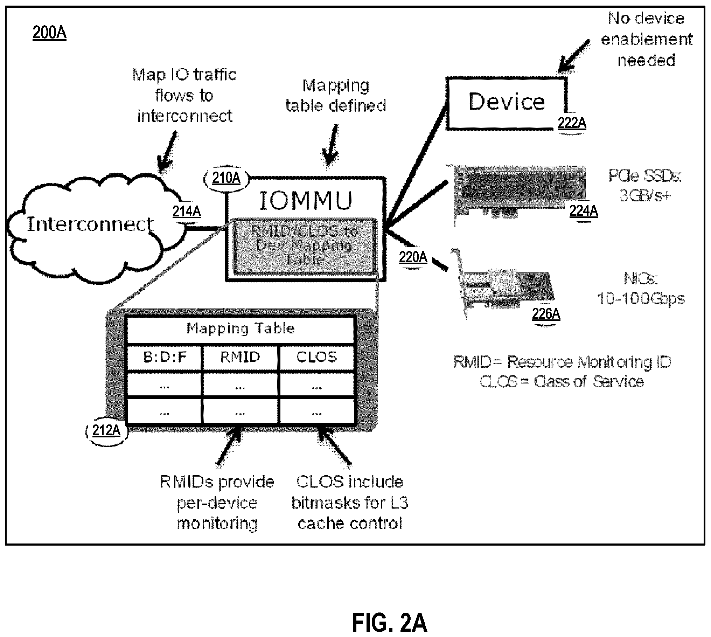

Figure 2A illustrates a system 200A including an I/O memory management unit (IOMMU) 210A according to an IOMMU-based tagging approach to I/O QoS. In system 200A, IOMMU 210A includes a mapping table 212A to map resource monitoring identifiers (RMIDs) and class of service (CLOS) values, for I/O traffic over interconnect 214A, to devices, such as device 222A, PCIe solid state drives (SSDs) 224A, and network interface controllers (NICs) 226A, through connections 220A.

In contrast, embodiments may provide for: dynamically setting a QoS priority associating each resource with specific QoS tags for monitoring (RMIDs) and control (CLOS) over shared resources; and mapping device PCIe/CXI, traffic channels (TCs) to virtual channels (VCs) and further to RMID/CLOS pairs. Implementations may include a mapping table, in an I/O complex, from device traffic to these tags. Implementations may include architectural elements such as an ACPI table for enumeration (called "IRDT") and MMIO interfaces, as described below.

Embodiments may include tag-based per-device or per-TC/VC or per-RMID or per-class-of-device monitoring or control over shared resources such as cache space. Embodiments may include per-device/tag/class monitoring of shared resource usage such as cache occupancy in use by devices, or "spillover" memory bandwidth or direct memory access (DMA) memory bandwidth in use by devices.

In this detailed description, threads running on processor or execution cores (e.g., an Intel^{®} architecture (IA) core) may be referred to a CPU agents, and embodiments may provide QoS features for non-CPU agents, a term which broadly encompasses the set of agents, excluding CPU agents (e.g., IA cores) which read from and write to either caches or memory, such as PCIe/CXI, devices and integrated accelerators.

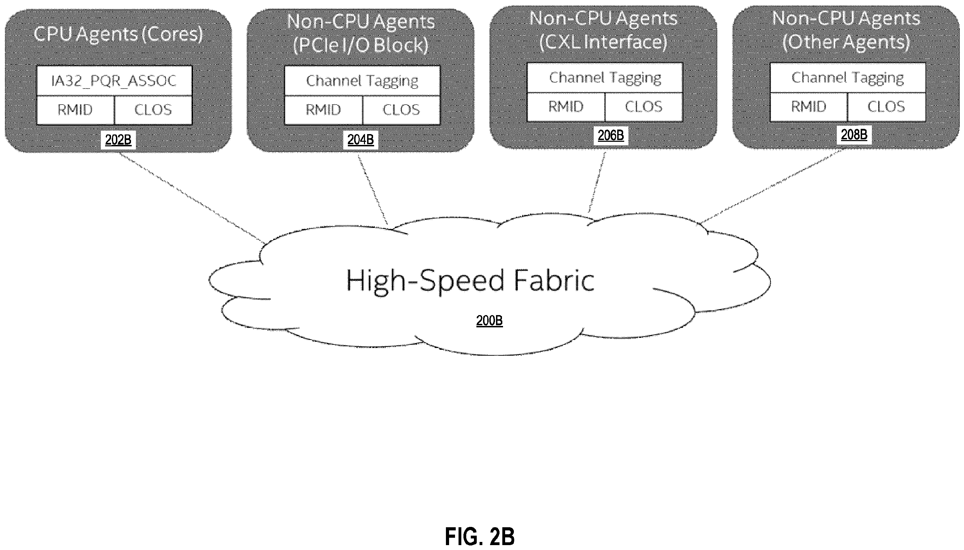

Figure 2B illustrates an embodiment including CPU agents 202B and non-CPU agents PCIe I/O Block 204B, CXL interface 206B, and other agents 208B connected through high speed fabric 200B.

Embodiments may include and/or provide capabilities used to monitor and control the resource utilization of non-CPU agents including PCIe and CXL devices, and integrated accelerators. In embodiments, non-CPU agent features enable monitoring of I/O device shared cache and memory bandwidth and cache allocation control by tagging device channels (PCIe/CXI, TC/VC) with RDT RMID/CLOS or similar QoS tags for monitoring/allocation respectively, using tagging applied in the I/O blocks, without the need for IOMMU or process address space identifier (PASID) involvement. Embodiments may provide for I/O devices to have capabilities equivalent to the CPU agent Intel^{®} RDT capabilities cache monitoring technology (CMT), memory bandwidth monitoring (MBM), and cache allocation technology (CAT).

In embodiments, CMT provides visibility into the cache (typically L3 or LLC). CMT provides occupancy counters on a per-RMID basis for non-CPU agents so cache occupancy (for example, capacity used by a particular RMID for I/O agents) may be tracked and read back dynamically during system operation.

In embodiments, L3 Total and Local External MBM allows system software to monitor the usage of bandwidth between L3 cache and local or remote memory by non-CPU agents on a per-RMID basis.

In embodiments, CAT allows control over shared cache capacity on a per-CLOS basis for non-CPU agents, enabling both isolation and overlap for better throughput, fairness, determinism, and differentiation.

Embodiments may include or provide controls at device-level and/or channel-level granularity in some cases. This granularity may be coarser than for software threads. CPU cores may execute hundreds of threads, all of which may be tagged with RMIDs and CLOS, whereas an I/O device such as a NIC may serve hundreds of software threads, but it may only be monitored and controlled at a device level or channel level (see subsequent sections for details on channel-level monitoring and controls).

### Example Enumeration of I/O RDT Monitoring (e.g., non-CPU agent RDT features enumeration)

CPU agent RDT features use the CPUID instruction to enumerate supported features and the level of support, and architectural Model-Specific Registers (MSRs) as interfaces to the monitoring and allocation features.

In embodiments, non-CPU agent RDT builds on CPU agent RDT by extending CPUID to indicate the presence and integration of non-CPU agent RDT, and by providing rich enumeration information in vendor-specific extensions to ACPI, for example in the I/O RDT (IRDT) table. Embodiments provide mechanisms to comprehend the structure of devices attached behind I/O blocks to particular links, and what forms of tagging are supported on a per-link basis. For example, the rich enumeration information referred to above may include information about supported features, the structure of devices attached to particular links behind I/O blocks, the forms of tagging and controls supported on each link, and the specific MMIO interfaces used to control a given device.

In embodiments, software may use the existing CPUID leaves to gather the maximum number of RMID and CLOS tags for each resource level (for example, L3 cache), and non-CPU agent QoS may also be subject to these limits. Some platforms may support a mix of features, for instance supporting L3 CAT and the non-CPU agent QoS equivalent, but no CMT or MBM monitoring. In embodiments, software may parse both CPUID and ACPI to obtain a detailed understanding of platform support and capabilities before attempting to use non-CPU agent QoS.

In embodiments, I/O QoS may use one or a combination of CPUID-based enumeration and ACPI-based enumeration (IRDT table). In embodiments, when support for non-CPU agent RDT features is detected using CPUID, ACPI may be consulted for further details on the level of feature support, device structures behind various I/O ports, and the specific MMIO interfaces used to control a given device.

CPUID-based enumeration may provide a method by which all architectural RDT features may be enumerated. For CPU agent RDT, monitoring details may be enumerated in a CPUID sub-leaf denoted as CPUID.0xF.[ResID], where ResID corresponds to a resource ID bit index from the CPUID.0xF.0 sub-leaf. Similarly, RDT allocation features are described in CPUID.0x10.[ResID]. Note that the ResID bit positions are not guaranteed to be symmetric or have the same encodings.

In embodiments, bits may be added in the CPU Agent RDT CMT/MBM leaf: CPUID.0xF.[ResID=1]:EAX[bit 9,10]; EAX[bit 9] set may indicate the presence of Non-CPU Agent Cache Occupancy Monitoring (equivalent of CPU Agent RDT's CMT feature); EAX[bit 10] set may indicate the presence of Non-CPU Agent memory L3 external BW monitoring (equivalent of CPU Agent RDT's MBM feature); a new bit in L3 CAT leaf: CPUID.0x10.[ResID=1(L3 CAT)]:ECX[bit 1] may be provided; ECX[bit 1] may be set to indicate the presence of Non-CPU Agent Cache Allocation Technology (the equivalent of CPU Agent RDT's L3 CAT feature); ECX[bit 2] as before may define that L3 code/data prioritization (CDP) is supported if set. Note that if there is no ability for devices to fill into core L2 caches, equivalent bits are defined in CPUID.0x10.[ResID=2 (L2 CAT)].

If any of these non-CPU agent RDT enumeration bits are set, indicating that a monitoring feature or allocation feature is present, it also indicates the presence of the IA32_L3_IO_RDT_CFG architectural MSR. This MSR may be used to enable the non-CPU agent RDT features, as described below.

Some platforms may support a mix of features, for instance supporting L3 CAT architectural controls and the non-CPU agent RDT equivalent, but no CMT/MBM monitoring or non-CPU agent monitoring equivalent, and these capabilities should be enumerated on a per-feature and per-platform basis.

In embodiments, there might be no CPUID leaves or sub-leaves created for non-CPU agent QoS; rather, existing CPUID leaves may be augmented or extended, for example, with a bit per resource type indicating whether non-CPU agent RDT monitoring or control is present. For example, CPUID.0xF(Shared Resource Monitoring Enumeration leaf).[ResID=1]:EAX[bit 9,10] enumerates presence of CMT and MBM features for non-CPU agents, respectively; CPUID.0x10(Cache Allocation Technology Enumeration Leaf).[ResID=1(L3 CAT)]:ECX[bit 1] enumerates the presence of the L3 CAT feature for non-CPU agents.

In embodiments, if a particular CPU agent RDT feature is not present, an attempt to use non-CPU agent RDT equivalents may result in general protection faults in the MSR interface. Attempts to enable unsupported features in the I/O complex may result in writes to the corresponding MMIO enable or configuration interfaces being ignored.

### Non-CPU Agent RDT Feature Enable MSR

In embodiments, before configuring non-CPU agent RDT through MMIO, the feature should be enabled using a non-CPU agent RDT Feature Enable MSR, IA32_L3_IO_RDT_CFG (e.g., MSR address 0C83H), an example of which is represented as MSR 200C in Figure 2C. The presence of one or more CPUID bits indicating support for one or more non-CPU agent RDT features also indicates the presence of this MSR. This MSR may be used to enable the non-CPU agent RDT features.

In embodiments, two bits are defined in MSR 200C. For example, an L3 Non-CPU agent RDT Allocation Enable bit (e.g., bit 0, shown as IRAE or A 202C) is supported if CPUID indicates that one or more non-CPU agent RDT resource allocation features are present, and when set, enables non-CPU agent RDT resource allocation features. For example, an L3 Non-CPU agent RDT Monitoring Enable bit (e.g., bit 1, shown as IRME or M 204C) is supported if CPUID indicates that one or more non-CPU agent RDT resource monitoring features are present, and when set, enables non-CPU agent RDT monitoring features.

In embodiments, the default value for MSR 200C is 0x0, specifying that both classes of features are disabled by default. All bits not defined are reserved. Writing a non-zero value to any reserved bit will generate a General Protection Fault (#GP(0)).

In embodiments, MSR 200C is scoped at the L3 cache level and is cleared on system reset. It is expected that software will configure MSR 200C consistently across all L3 caches that may be present on that package.

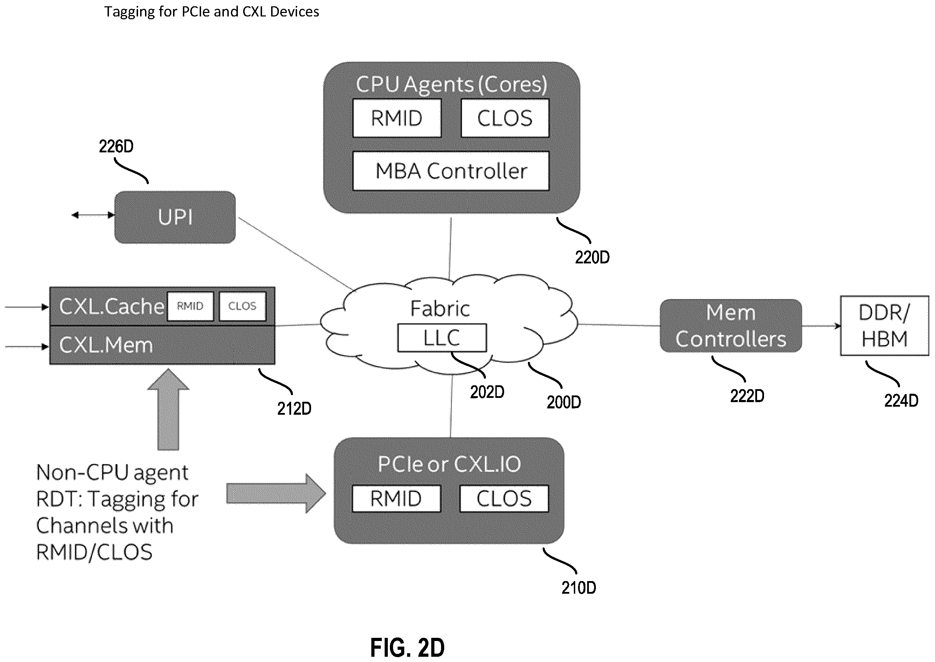

In an example of device tagging with RMIDs and/or CLOS, as shown in Figure 2D, a PCIe device 210D and a CXL device 212D are tagged for monitoring and control of upstream resources in an L3 or LLC 202D (within fabric 200D). For CPU cores 220D, and as defined in the CPU agent RDT feature set, their bandwidths may be controlled with the MBA feature set. Memory controllers 222D (coupled to double data rate and/or high bandwidth memory 224D) and an ultra path interconnect (UPI) 226D may also be connected to LLC 202D through fabric 200D. In an embodiment, cores, PCIe devices, and CXL devices may be symmetrically arranged about the fabric and may be symmetric in their ability to use RMIDs and CLOS.

In embodiments, the RDT monitoring data retrieval MSRs IA32_QM_EVTSEL and IA32_QM_CTR are used for monitoring usage by non-CPU agents in the same way that they are used for RDT for CPU agents.

In embodiments, the CPU cache capacity control MSR interfaces are also used for controlling I/O device access to the L3 cache. The CLOS assigned to the device and the corresponding capacity bitmask in the IA32_L3_QOS_MASK_n MSR governs the fraction of the L3 cache into which the data may be filled.

In embodiments, the CLOS tag retains the same meaning with regard to L3 fills for both CPU agents and non-CPU agents. Other cache levels may also be applicable depending on model-specific data flow patterns, which are governed by how I/O device data is filled into the cache in a model-specific fashion as governed by a given product generation's implementation of a Data Direct I/O (DDIO) feature.

### Common Tags

In embodiments, non-CPU agent RDT allows the traffic and operation of non-CPU agents to be associated with RMIDs and CLOS. In CPU agent RDT, RMIDs and CLOS are numeric tags which may be associated with the operation of a thread through the IA32 PQR ASSOC MSR. In non-CPU agent RDT, a series of MMIO interfaces may be defined and used to enable device and/or channels to be tagged with RMIDs and/or CLOS and to associate I/O devices with RMID and CLOS tags, and the numerical interpretation of the tags remains the same.

For example, a particular CLOS tag, such as CLOS[5], may mean the same thing from the perspective of an CPU core or a non-CPU agent, and the same holds for RMIDs. In this fashion, RMIDs and CLOS used for non-CPU agents are said to be drawn from a common pool of RMID or CLOS tags, defined at the common L3 configuration level. Often these tags have specific meanings at a particular level of resource such as the L3 cache.

With non-CPU agent RDT, specific devices may be selected for monitoring and control, and software enumeration and control are added to enable non-CPU agent RDT to build atop CPU agent RDT, to comprehend the topology of devices behind I/O links (such as PCIe or CXL), and to enable association of devices with RMID and CLOS tags.

### I/O Blocks and Channels

In embodiments, I/O interfacing blocks are used to bridge from the ordered, non-coherent domain (such as PCIe) to the unordered, coherent domain (for example, a shared interconnect fabric hosting the L3 cache). The non-CPU agent RDT interface describes the devices connected behind each I/O complex (which may contain downstream PCIe root ports or CXL links) and enables configuration RMID/CLOS tagging for the same.

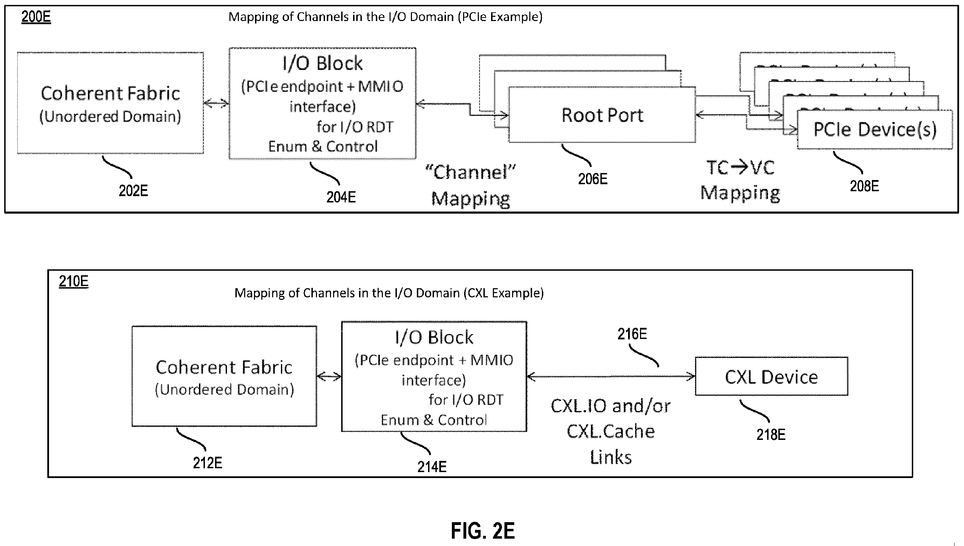

An example of the I/O architecture is shown in Figure 2E. Channel mapping may occur anywhere between the device and the I/O block or within the I/O block.

Shown, for example, in Figure 2E as architecture 200E, PCIe devices 208E may be connected through a root port 206E and routed through an I/O block 204E, which applies non-CPU agent RDT tagging (RMID and CLOS tagging) before traffic reaches the coherent fabric 202E. Device traffic which is routed on various TCs and mapped to VCs, as defined in the PCIe specification, may be mapped to internal channels between the root port and the I/O block. The non-CPU agent RDT enumeration structures define the mapping between PCIe VCs and the non-CPU agent RDT channels so that software may perform tagging configuration based on channels for platforms which support this capability (see the following sections for more detail).

Shown, for example, in Figure 2E as architecture 210E, CXL.IO and/or CXL.Cache links 216E may connect a CXL device 218E to an I/O block 214E responsible for tagging, if supported, before traffic reaches the coherent fabric 212E. The links (CXL.IO and CXL.Cache) are controlled separately, through separate software interfaces.

Note that this implementation is different from prior approaches in that the I/O blocks tag a limited number of channels with RMID / CLOS - no longer using an IOMMU-based implementation to associate PASIDs to RMIDs/CLOS.

### I/O Block Configuration

As described in the preceding section, PCIe devices mapped through their VCs to channels may be configured on a per-channel basis in the I/O Block. CXL is a subset example of this, with the same configuration format, but only one configuration entry (the equivalent of a single channel).

In embodiments, an enumerated number of channels are supported in IRDT ACPI and configured through an MMIO interface. A number of downstream PCIe or CXL devices may be mapped to various channels, and their traffic streams may be tagged, as applicable, through configuration of the I/O block.

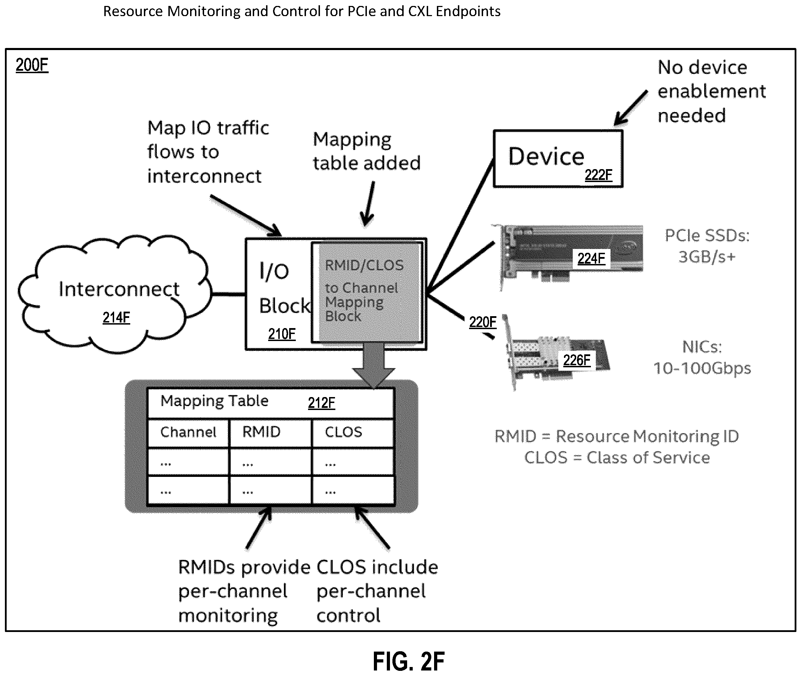

For example, Figure 2F illustrates a system 200F, in which an I/O block 210F includes a mapping table 212F to map resource monitoring identifiers (RMIDs) and class of service (CLOS) values, for I/O traffic over interconnect 214F, to channels mapped to devices such as device 222F, PCIe SSDs 224F, and NICs 226A, connected to I/O block 210F through connections 220F.

### Shared-L3 Configuration

The following sub-sections describe embodiments including interplay between shared-L3 configuration and non-CPU agent RDT features.

### Software Flow

In embodiments, software actions required to utilize non-CPU agent RDT include enumeration of the supported capabilities and details of that support, and usage of the features through architectural platform interfaces. Software may enumerate the presence of non-CPU agent RDT through a combination of parsing bit fields from CPUID and the IRDT ACPI table. The CPUID infrastructure provides basic information on the level of CPU agent RDT and non-CPU agent RDT support present and details of the common CLOS/RMID tags shared with CPU agent RDT. The IRDT ACPI extensions provide many more details on non-CPU agent RDT specifically, such as which I/O blocks support non-CPU agent RDT and where the control interfaces to configure the I/O blocks are located in MMIO space.

In embodiments, after software has enumerated the presence of non-CPU agent RDT, configuration changes may be made through selecting a subset of RMID/CLOS tags to use with non-CPU agent RDT, and resource limits for those tags through MSRs for shared platform resources such as L3 cache (for example, for I/O use of L3 CAT) may be configured through the I/O block MMIO interfaces (the location of which is enumerated via IRDT ACPI). After resource limits are associated, RMID/CLOS tagging may be applied to the I/O device upstream traffic by assigning each I/O device into RMID/CLOS tags through its mapping to channels (and corresponding configuration through the MMIO interfaces for each I/O block).

In embodiments, while upstream shared SoC resources like L3 cache are monitored and controlled via shared RMID/CLOS tags, certain resources which are closer to the I/O may be controlled locally within each I/O block. In this approach, RMIDs and CLOS are used for upstream resources which may be shared with CPU cores, but capabilities unique to the I/O device domain are controlled through I/O block-specific interfaces.

In embodiments, after tags are assigned and resource limits are applied, upstream traffic from I/O devices, through I/O blocks tagged with the corresponding RMIDs/CLOS, is monitored and controlled within the shared resources of the SoC, much as CPU agent resources are controlled against these tags in CPU agent RDT.

In embodiments, as the IRDT ACPI tables used to enumerate non-CPU agent RDT are generated by the BIOS, in the event of a hot-plug operation the OS or VMM software should update its internal tracking of device mappings based on newly added or removed devices.

In some embodiments including bifurcation of a set of PCIe lanes, downstream devices which may be mapped to individual channels may still be separately tagged and controlled, but devices sharing channels will be mapped together against the same RMID/CLOS tags. As CXL devices have no notion of channels, in the case of a bifurcated CXL link all downstream devices will be subject to the same RMID/CLOS.

### Monitoring: Data Flows for RMIDs

As previously described, after RMID tags are applied to non-CPU agent traffic, all RMID-driven counter infrastructure in the platform may be used with non-CPU agent RDT. For instance, RMID-based cache occupancy and memory bandwidth overflow data is collected for non-CPU agents and may be retrieved by software. For each supported cache monitoring resource type, hardware supports only a finite number of RMIDs. CPUID.(EAX=0FH(Shared Resource Monitoring Enumeration leaf), ECX=1H).ECX enumerates the highest RMID value that can be monitored with this resource type.

In embodiments, as the interfaces for CPU agent RDT data retrieval for RMID-based counters are already defined, the same interfaces are used, including MSR-based data retrieval for the corresponding set of three Event IDs (EvtIDs) defined for CPU agent RDT's CMT and MBM features.

In embodiments, RMIDs are allocated to devices by software from the pool of RMIDs defined at the L3 cache level, and the IA32_QM_EVTSEL / IA32_QM_CTR MSRs may be used to specify RMIDs and Event IDs and retrieve data.

An appropriate MSR pair may be used to retrieve event data in embodiments in which properties are inherited from CPU agent RDT. All of access rules and usage sequence, reserved bit properties, initial values, and virtualization properties may be inherited from CPU agent RDT.

### Allocation: CLOS-based Control Interfaces

In embodiments, allocation features for non-CPU agents use CLOS-based tagging for control of cache at a given level, subject to where data fills from I/O devices in a particular cache and SoC implementation, which in common cases may be the last-level cache (L3) as described in the ACPI (e.g., specifically in the IRDT sub-table known as a resource control structure (RCS) and its flags). Software may adjust the levels of cache that it controls based on the expected level(s) of cache into which I/O data may fill subject to flags in the corresponding RCS. This in turn may affect which CPU agent CAT control masks software programs to control the data fills of non-CPU agents and may vary depending on how a particular RCS is connected to shared resources on a platform.

In embodiments, for each supported Cache Allocation resource type, the hardware supports only a finite number of CLOS. CPUID.(EAX=10H(Cache Allocation Technology Enumeration Leaf), ECX=2):EDX[15:0] reports the maximum CLOS supported for the resource (CLOS are zero-referenced, meaning a reported value of "15" would indicate 16 total supported CLOS). Bits 31:16 are reserved.

For example, with a non-CPU agent such as a PCIe device filling data into an L3 cache, the RCS's "Cache Level Bit Vector" would have bit 17 set to indicate the L3 cache, and software may control the CPU agent RDT L3 CAT masks (in IA32_L3_QoS_MASK_n MSRs) to define the amount of cache into which non-CPU agents may fill. As with RMID management, the CLOS used in this context are drawn from the pool at the applicable resource (L3 cache in this context).

If other cache levels are introduced or used in the future, incremental software enabling may be required to comprehend fills into other cache levels.

In embodiments, masks used for control may be drawn from existing definitions of such cache controls in the CPU agent RDT definitions (e.g., details such as reserved fields, initialization values, and so on), such as the CPU agent RDT L3 CAT control MSRs 200G, which may be programmed by privileged software 210G, as shown in Figure 2G.

### CXL-Specific Considerations

The following sub-sections describe CXL-specific device considerations including management of traffic on multiple links and CXL device types according to embodiments.

### CXL block Interfacing Fundamentals

In embodiments, CXL devices may connect to a resource management unit descriptor (RMUD), e.g., an I/O RDT RMUD, via multiple RCSes, and independent control of each RCS may be involved.

In embodiments, non-CPU agent RDT features provide monitoring and controls for CXL.IO and CXL.Cache link types; however, CXL.mem is not subject to controls in the I/O block as it is viewed as a resource rather than an agent. Bandwidth to CXL.mem may be controlled at the agent source (for example, using MBA) as previously described and where supported.

In embodiments, accelerators (e.g., integrated accelerators using integrated CXL links) may be monitored and controlled using the semantics described in preceding sections.

### Use Cases

Examples of non-CPU agent RDT use cases involving PCIe, CXL, and integrated accelerators are described below. In these examples as well as other embodiments, RMID and CLOS tags may be configured and actuated by software.

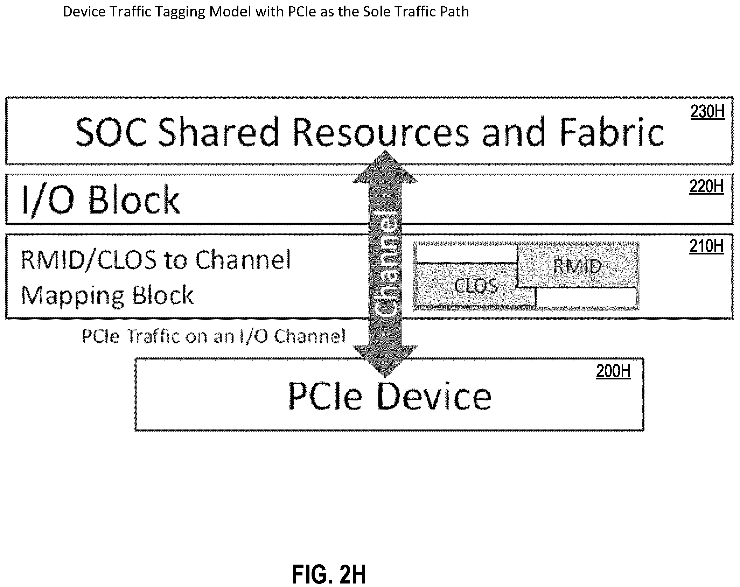

As an implementation of the architectural model described above, as shown in Figure 2H, an I/O block 220H tags upstream DMA traffic (such as PCIe writes), enabling the utilization, by a device 200H, of the shared resources 230H of the fabric, such as L3 cache, to be monitored and controlled through RMIDs and CLOS, which are mapped to channels by channel mapping block 210H.

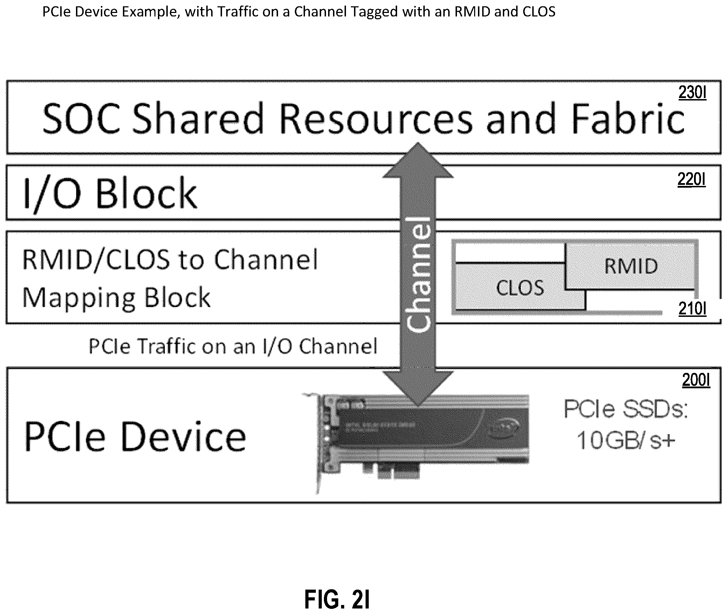

Figure 2I shows an example with high-performance PCIe SSDs 200I, subject to tagging, by I/O block 220I, with CLOS (e.g., so that its L3 cache footprint may be controlled, and RMIDs (e.g., so that its L3 cache occupancy and overflow bandwidth to memory may be monitored), which are mapped to channels by channel mapping block 210I for monitoring and control of shared resources 230I (e.g., L3 cache).

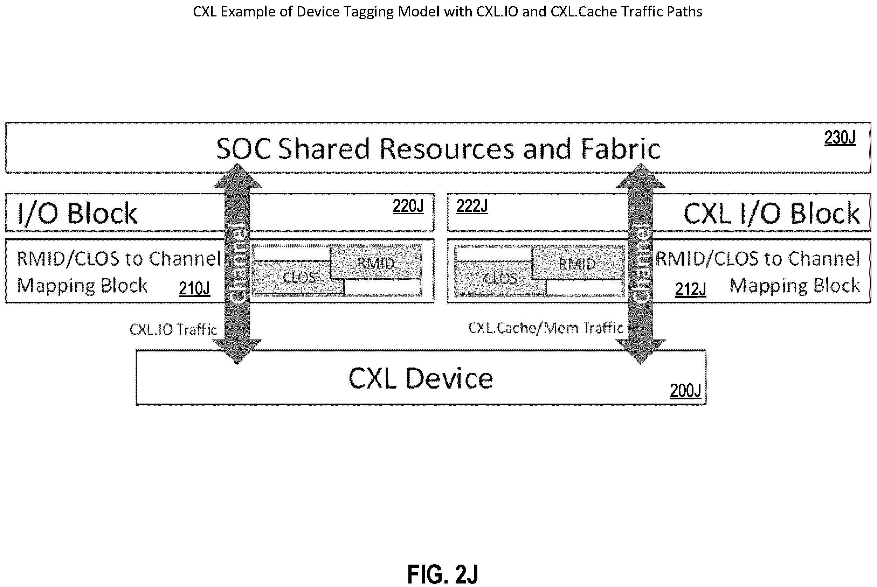

Figure 2J shows an example with a CXL device 200J, in which two paths are used for the device's traffic to shared resources 230J, one over CXL.IO, and one over CXL.Cache,, through two separate I/O blocks 220J and 222J, respectively, each corresponding to a channel mapping block 210J or 212J. Note that the CXL.Cache link defines only one channel. In such a case, the software may configure RMID and CLOS tagging separately for the links. The links operate independently. Note also that no controls are provided for CXL.Mem, as CXL.Mem accesses memory on a target device, and bandwidths from logical processors may be controlled with RDT's Memory Bandwidth Allocation (MBA) feature. A more detailed discussion of this case is provided below.

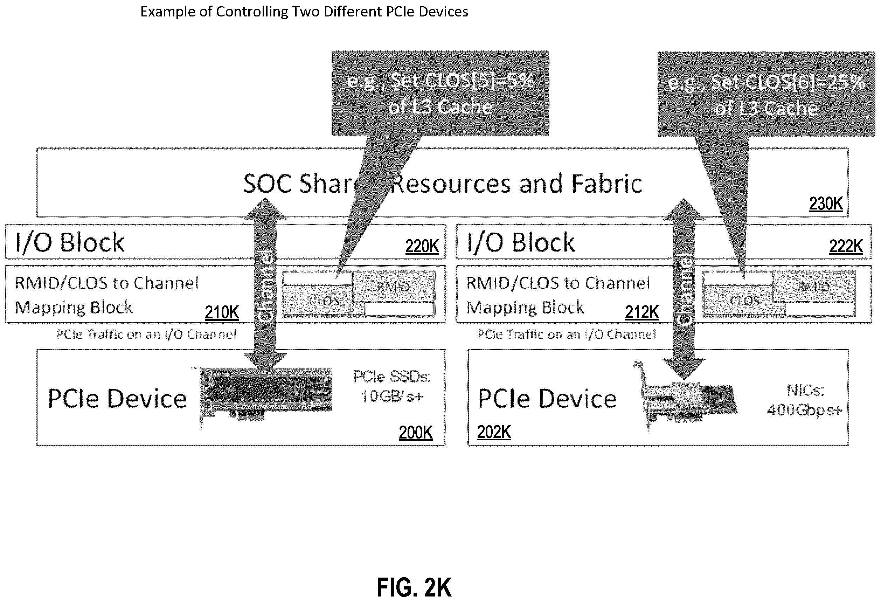

Figure 2K shows an example with multiple devices with different properties access shared resources 230K. A pair of PCIe devices 200K and 202K on separate I/O blocks 220K and 222K, respectively, each corresponding to a channel mapping block 210K or 212K, may be controlled independently, with separate RMID and CLOS tags. In this case a PCIe SSD 200K which does not utilize the cache effectively may be limited, but a NIC 202K which fills into the cache for data to be consumed by CPU cores may be prioritized (e.g., set at 25% compared to 5% for the SSD).

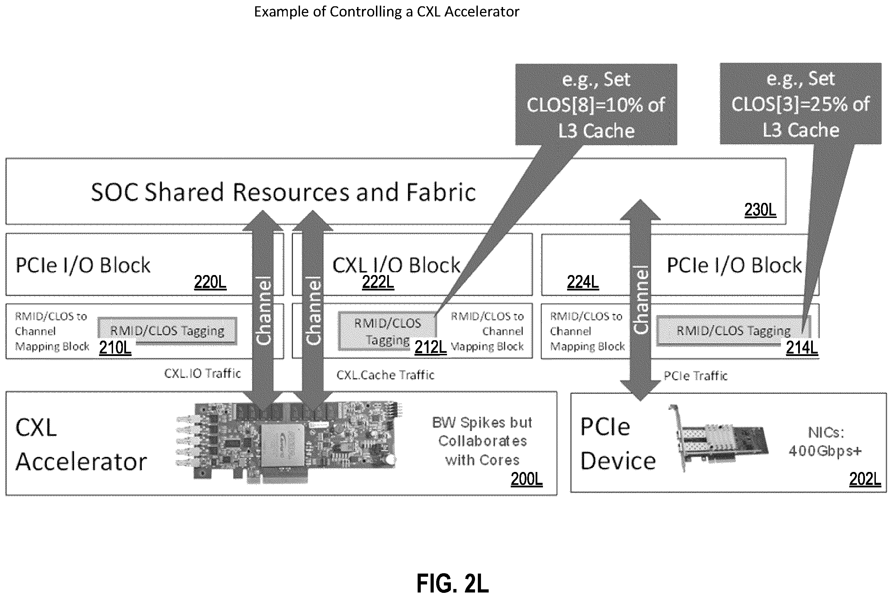

Figure 2L shows an example of accessing shared resources 230L with one CXL accelerator 200L (e.g., a CXL-enabled field programmable gate array (FPGA) card), utilizing CXL.IO and CXL.Cache, controlled by I/O blocks 220L and 222L (corresponding to channel mapping blocks 210L and 212L), independently from an I/O block 224L (corresponding to channel mapping block 214L) with a PCIe device 202L attached.

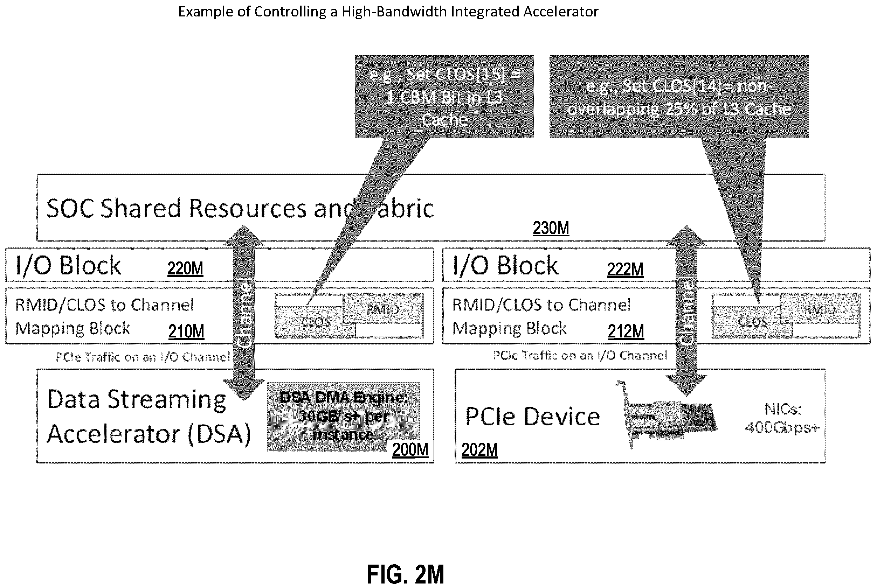

Figure 2M shows an example of tagging and controlling an integrated accelerator 200M (e.g., a Data Streaming Accelerator (DSA)) that accesses shared resources 230M through I/O block 220M and channel mapping block 210M, alongside a PCIe device 202M that accesses shared resources 230M through I/O block 222M and channel mapping block 212M. Depending on system load conditions and the DSA usage case, software may choose to allocate non-overlapping portions of the cache to minimize cache contention effects.

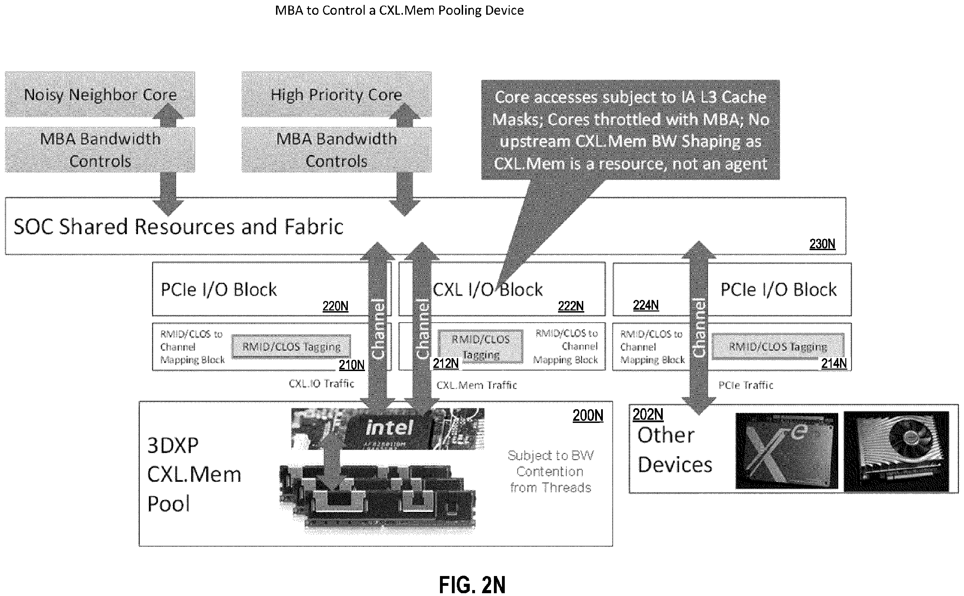

Figure 2N shows a complex example with multiple features in use. Access to shared resources 230N by various PCIe devices 202N is controlled with non-CPU agent RDT by I/O block 224N and channel mapping block 214N, but a CXL device 200N is also present, using CXL.IO and CXL.Mem.. The CXL device 200N may be tagged and controlled on its CXL.IO interface by I/O blocks 220N and 222N and channel mapping blocks 210N and 212N.

As the main purpose of CXL.Mem is for host accesses to device memory, however, traffic responses up through the CXL.mem path are not subject to MBA bandwidth shaping, though they are sent with RMID and CLOS tags. If bandwidth is constrained on this link and software seeks to redistribute bandwidth across different priorities of accessing agents, such as CPU cores, the MBA feature may be used to redistribute bandwidth and throttle at the source of the requests (the agent's traffic injection point).

This example shows that for comprehensive management of cache and bandwidth resources on the platform, a combination of CPU agent RDT and non-CPU agent RDT controls may be necessary.

In embodiments, a programming interface for I/O counter width, overflow bit, CMT, MBM, etc. enumeration for I/O RDT monitoring may be shared with existing features, for example using register 200O as shown in Figure 2O, may be shared with existing features:
- CPUID.(EAX=0FH, ECX=1H).EAX[bit 9]: If 1, indicates the presence of non-CPU agent RDT CMT support.
- CPUID.(EAX=0FH, ECX=1H).EAX[bit 10]: If 1, indicates the presence of non-CPU agent RDT MBM support.
- CPUID.(EAX=0FH, ECX=1H).EAX[7:0]: Encode counter width as offset from 24b in bits[7:0]. In EAX bits 7:0, the counter width is encoded as an offset from 24b. A value of zero in this field implies that 24-bit counters are supported. A value of 8 indicates that 32-bit counters are supported, as first introduced in the 3rd generation Intel^{®} Xeon Scalable Processor Family, though other implementations may vary. With this enumerable counter width, a requirement that software poll at 1Hz is removed. Software may poll at a varying rate with reduced risk of rollover, and under typical conditions rollover is likely to require hundreds of seconds (though this value is not explicitly specified and may vary and decrease in future processor generations as memory bandwidths increase). If software seeks to ensure that rollover does not occur more than once between samples, then sampling at 1Hz while consuming the enumerated counter widths' worth of data may provide this feature, for a specific platform and counter width.
- CPUID.(EAX=0FH, ECX=1H).EAX[8]: Enumeration of the presence of an overflow bit in the IA32_QM_CTR MSR via EAX bit[8]. Software that uses the MBM event retrieval MSR interface should be updated to comprehend this new format, which enables up to 61-bit MBM counters to be provided by future platforms, with Error, Unavailable and Overflow bits to indicate error conditions. Higher-level software that consumes the resulting bandwidth values is not expected to be affected. An overflow bit is defined in the IA32_QM_CTRMSR, bit 61, if CPUID.0F.[ECX=1]:EAX[bit 8] is set. If supported, this rollover bit will be set on overflow of the MBM counters and will be reset upon read, enabling a variable software-defined counter polling interval for reduced sampling overhead.
- Bits 31:11 of EAX are reserved.

In embodiments, after monitoring and subfeatures have been enumerated, software may associate a given software thread (or multiple threads as part of an application, virtual machine (VM), group of applications, or other abstraction) with an RMID, for example using register 200P as shown in Figure 2P, to begin using the monitoring features. A similar concept may be used to tag I/O device channels as described elsewhere in this description.

In embodiments, a CMT/MBM data retrieval interface, shown for example as registers 200Q in Figure 2Q, may be shared with existing RDT features.

Embodiments may provide a programming interface for I/O RDT allocation. For example:
- CPUID.(EAX=10H, ECX=1):ECX[bit 1]: If 1, indicates L3 CAT for Non-CPU agents is supported.
- CPUID.(EAX=10H, ECX=1):ECX[bit 3]: If 1, indicates non-contiguous capacity bitmasks for L3 CAT are supported, meaning that the bits which are set by software in the various IA32_L3_MASK_n registers are not required to be contiguous. This capability is supported simultaneously with I/O RDT L3 CAT.
- Bits 0 and 31:4 of ECX are reserved.

### ACPI-based enumeration and definitions for I/O RDT

In embodiments, software may query processor support of shared resource monitoring and allocation capabilities by executing CPUID for the CPU Agents RDT features. An ACPI structure named IRDT may be consulted for further details on the enhanced feature support for non-CPU Agents. These ACPI structures also provide the locations of specific MMIO interfaces used to allocate or monitor shared resources.

In embodiments, IRDT ACPI enumeration definition and RMID/CLOS tagging and mapping (e.g., to SoC components) may provide:
- top-level configuration information for an SoC, such as how many RMID/CLOS tags non-CPU agent RDT supports relative to CPU agent RDT (as enumerated by CPUID)
- a logical description of the control hierarchy - meaning which MMIO address to use to configure a link's RMID/CLOS tagging
- flexibility in the implementation topology of devices behind I/O blocks, and cover cases with discrete or integrated PCIe and CXL links, and integrated accelerators
- enhanced ease-of-use information for software, including device topologies, TC/VC/channel mapping information for advanced QoS usages for forward-compatibility

In embodiments, the top-level ACPI enumeration structure defined to support I/O RDT is the IRDT structure, which is a vendor-specific extension to the ACPI table space. The named IRDT structure is generated by BIOS and contains all other non-CPU agent RDT ACPI enumeration structures and fields (e.g., as described below) and may define new ACPI layouts, mapping to RMUDs, device specific structures (DSSes), RCSes, etc. In embodiments, reserved fields in IRDT structures should be initialized to 0 by BIOS.

Embodiments may include RMUDs under or embedded within the IRDT structure. RMUDs typically map to I/O blocks within the system, though it is possible that one RMUD may be defined at other levels (such as one RMUD per SoC).

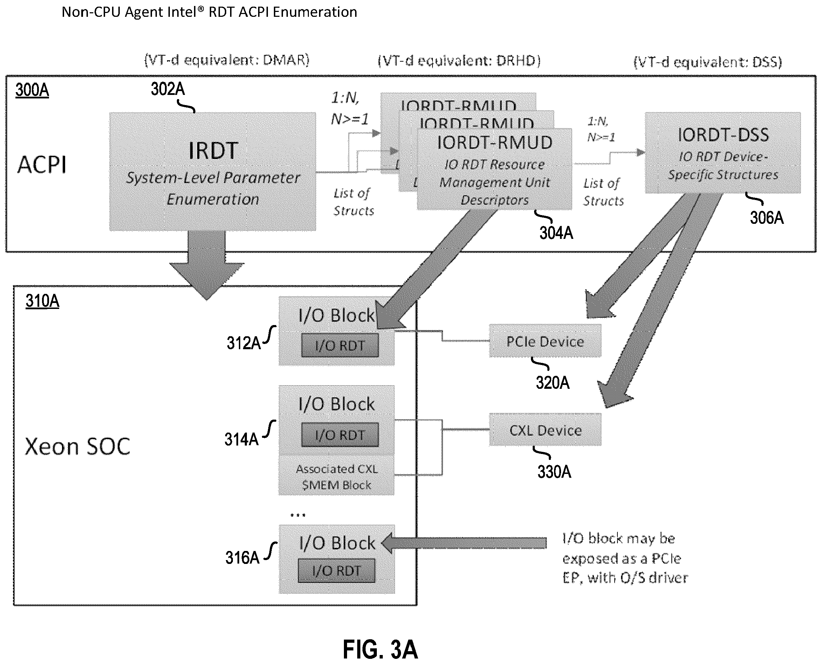

An example mapping is shown in Figure 3A, showing ACPI details 300A at the top, and SoC (e.g., Intel^{®} Xeon^{®} SoC) mappings 300B to hardware blocks at the bottom. The depicted relationships between IRDT table 302A and RMUDs 304A are for a typical implementation, in which RMUDs 304A describe the properties of an I/O block (e.g., 312A, 314A, 316A). The IRDT table 302A defines zero or more RMUDs 304A, and an RMUD 304A contains one or more RPs.

In embodiments, an RMUD structure 304A contains two embedded structures, a DSS 306A and RCSes which map to devices and links and help describe the relationships regarding which I/O devices are connected to particular links, and which I/O links are in use by which devices. Each RMUD 304A defines one or more DSS 306A and RCSes.

In the example of Figure 3A, one DSS 306A exists per PCIe device (e.g., 320A, controlled by I/O block 312A, or any PCIe end-point (EP) controlled by I/O block 316A) CXL device (e.g., 330A, controlled by I/O block 314A), or other non-CPU agent device (e.g., an accelerator), subservient to an RMUD. A CXL device may be expected to have multiple links (for example, CXL.Cache and CXL.IO) and this topology is described by the associated DSS and multiple RCSes for the device and its links. Note that Figure 3A shows DSS 306A downstream of RMUD 304A but does not show an RCS for simplicity.

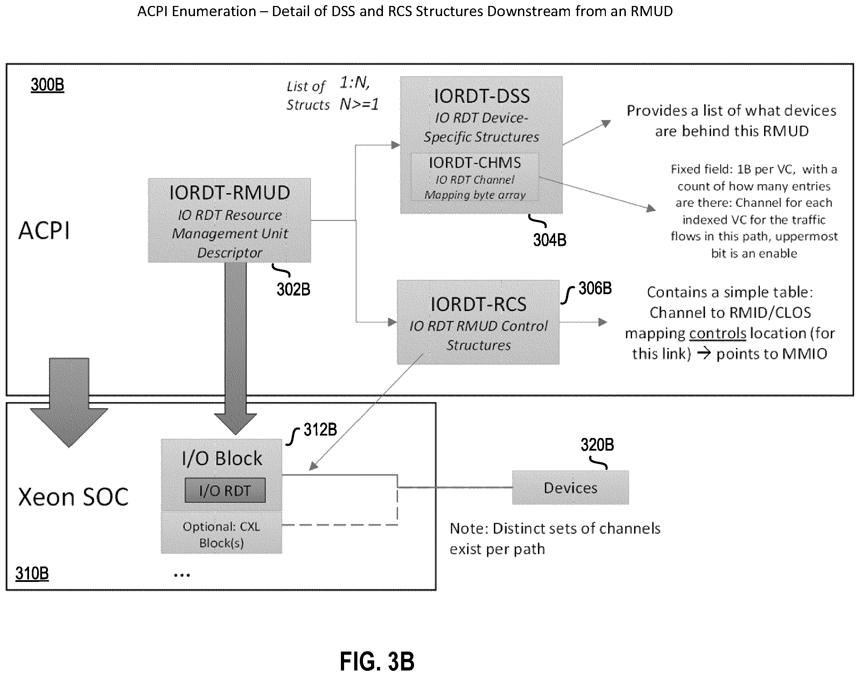

Figure 3B shows an example of an RMUD 302B mapping, in ACPI top level 300B, to a DSS 304B and one or more RCSes 306B. Each device 320B attached to an I/O block 312B in SoC level 310B is described by a DSS 304B, and has one or more links, with properties described in the RCSes 306B. The RCSes 306B contain pointers to MMIO locations (e.g., in absolute address form, not base address register (BAR) relative) to allow software to configure the RMID/CLOS tags and bandwidth shaping properties, if supported, in an I/O block 312B.

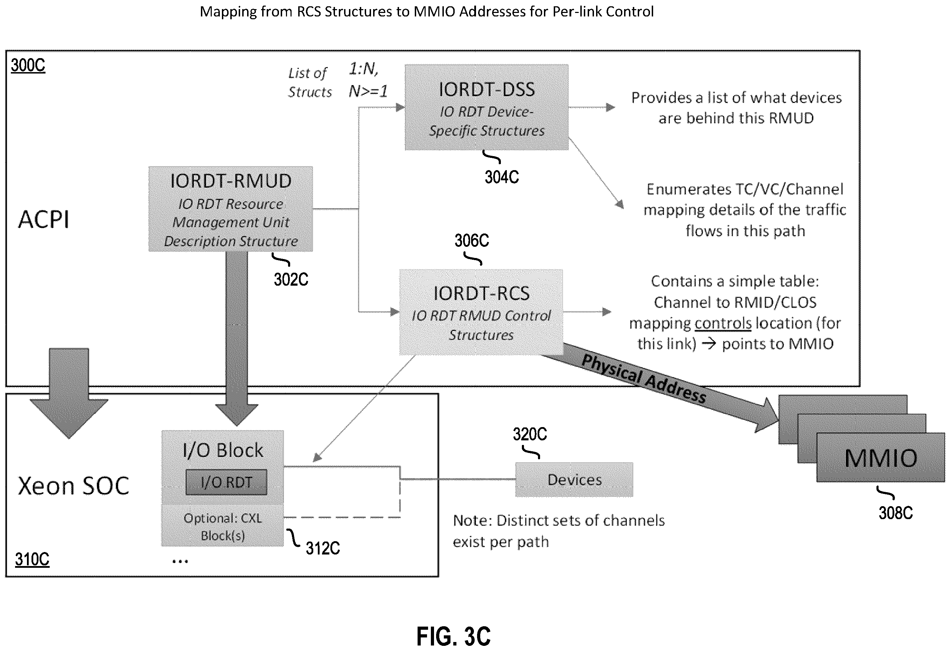

Figure 3C shows an example with a further layer of detail; devices 320C mapped through I/O blocks 312C in SOC level 310C are described by RMUDs 302C in ACPI top level 300C, the DSS 304C describes the properties of the device 320C, and the RCS 306C provides a pointer to the MMIO locations 308C used for configuring the tagging and bandwidth shaping for a particular link.

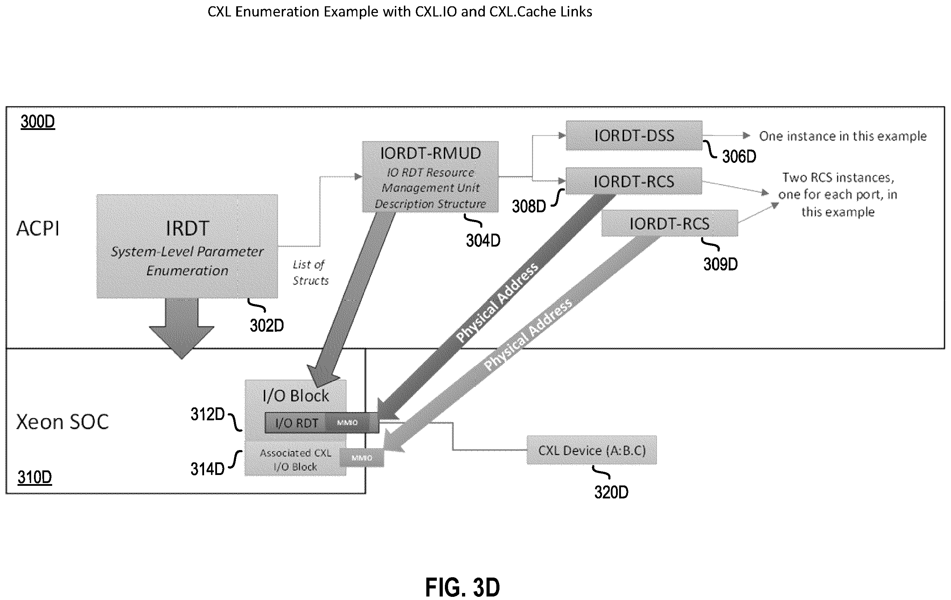

Given the table hierarchy described above, an example CXL Type 1 (CXL.IO + CXL.Cache) device mapping is shown in Figure 3D. The device 320D is described, at ACPI top level 300D by one DSS 306D behind an RMUD 304D, while two RCSes 308D and 309D are used, one for each link type CXL.IO and CXL.Cache corresponding to I/O blocks 312D and 314D at SoC level 310D.

Given the previously described ACPI table hierarchy and relationships of RMUD, DSS, RCSes, etc., examples of formats and constituent field definitions of an IRDT table 300E, an RMUD table 300F, a DSS table 300G, an RCS table 300H, and an MMIO table 3I are shown in Figures 3E, 3F, 3G, 3H, and 3I, respectively, and interpretation, corner cases, interactions between fields, etc. are described below.

An example of the top-level ACPI table structure, the I/O Resource Director Technology table (IRDT) 300E is shown in Figure 3E, and one instance of this table is defined at the system level, generated by the system BIOS. This table includes a unique signature, and length including all sub-structures, including embedded RMUDs. The length of the IRDT table is variable.

A series of high-level flags allows the basic capabilities of monitoring and control for I/O links (for example, PCIe) and coherent links (for example, CXL) to be quickly extracted. Embedded within the IRDT table is a set of one or more RMUDs, which are typically mapped to I/O blocks and define their properties. In some instantiations, one RMUD may be defined for the system, or in a finer-grained approach, one RMUD may be defined for each downstream link and device combination, though this is expected to be an uncommon case.

An example of an RMUD table structure 300F is shown in Figure 3F. RMUD structure 300F includes a number of fields including length of the RMUD instance and all embedded sub-structures (DSS and RCS entries), an integration parameter that maps to the SoC properties, including the minimum and maximum RMID and CLOS tags that are available for use in monitoring and controlling devices under this RMUD. While the common case is that these parameters would match the CPU agent RDT parameters, there may be certain RMUDs which support a subset of the overall RMID and CLOS space.

Each RMUD entry contains a number of embedded DSSes and RCSes, identified by their "Type" fields, which describe the devices and links behind a given RMUD.

The Device Scope Structures behind each RMUD describe the properties of a device, that is, each DSS maps 1: 1 with a device behind a particular RMUD.

An example of a DSS 300G is shown in Figure 3G. The DSS table definition includes a type field (Type = 0 identifies a DSS), the length of the entry, device type, and an embedded channel management structure (CHMS). The CHMS defines which RCS(es) are applicable to controlling this device (DSS), and which internal I/O block channels each of the link's virtual channels (VCs) may map to (in the case of PCIe, up to eight VCs are supported, but only the first entry is valid in the case of CXL). Valid configurations for the CHMS include one entry per RCS (link).

In the DSS Device Type field, a value of 0x02 denotes that a PCIe Sub-hierarchy is described by this DSS. Each root port described by a DSS will have type 0x02. System software may use the enumerated devices found under such a root port to comprehend share bandwidth relationships in the channels under an RMUD.

DSS type 0x01 indicates the presence of a root complex integrated endpoint device (RCEIP), such as an accelerator. Note that a PCI sub-hierarchy may denote a root port, and for every DSS that corresponds to a root port it is expected that Device Type = 0x2.

Note that the CHMS field contains a list of CHMS structures, which may describe for instances DSS entries which are capable of sending traffic over multiple channels (which are in turn described by unique RCS entries).

Note that no discrete pluggable devices (for example, PCIe cards) are directly described by the DSS entries, rather the root ports are indicated (Device Type 0x2).

An example of an RCS 300H is shown in Figure 3H. The RCS provides details of the type of monitoring and controls supported for a particular link interface type, such as PCIe or CXL, and an MMIO location in which a table exists that may be used to apply monitoring and control features. The MMIO location provided is absolute location in MMIO space (64 bits), rather than hosted in a particular device and defined relative to a BAR.

Note that if CXL.IO and PCIe devices share the bandwidth of a certain RCS and its channels, then traffic for both protocols is carried on the same channel entries.

Note that in the enumeration the fields, the RMID offset, and CLOS offset are specified relative to the "RCS Block MMIO Location" field, meaning that the RMID and CLOS offsets may be relocatable within the MMIO space. The offset defines the block of a contiguous set of RMID or CLOS tagging fields, and the number of entries is defined by the "Channel Count" field (for example, a value of 8 channels may be common in certain PCIe tagging implementations).

### MMIO Register Descriptions for I/O RDT

In embodiments, a non-CPU agent RDT related register set (MMIO interfaces) may reside on at least one 4 KB-aligned memory mapped page. The exact location for the register region is implementation-dependent and is communicated to system software by BIOS through the IRDT ACPI structure. Multiple RCSes could be mapped to the same 4 KB-aligned page, or distinct pages. No other unrelated registers may be present in the pages used for non-CPU agent RDT. A virtual machine monitor (VMM) or operating system may use page-based access controls to ensure that only designated entities may use the non-CPU agent RDT controls.

In embodiments, when accessing non-CPU agent RDT MMIO interfaces, note that writes to reserved fields, writes to reserved offsets within the MMIO space, or writes of values greater than the supported maximum for a field will be ignored by hardware.

In embodiments, software interacts with the non-CPU agent RDT features by reading and writing memory-mapped registers. Software access to these registers includes:
- When updating registers through multiple accesses (whether in software or due to hardware disassembly), accesses should be ordered for proper behavior. These should be documented as part of the respective register descriptions.
- Locked operations to non-CPU agent RDT related registers might not be supported. Software should not issue locked operations to non-CPU agent RDT feature hardware registers.

### Link Interface Type RMID/CLOS Tagging MMIO Interfaces

In embodiments, IRDT ACPI structures might define MMIO interfaces for configuring the RMID/CLOS for each link interface type, as defined in the RCSes. An MMIO pointer defined in the RCS fields describes where the configuration interface exists for a particular link interface type. The MMIO locations are defined in an absolute address terms.

Figure 3I shows an example MMIO field layout, in MMIO table 300I, for RMID and CLOS tagging and bandwidth shaping. A common format is used for all RCS types, including for instance RCS instances that support PCIe or CXL use the same field layout.

In some embodiments the RDT RMID/CLOS tags may be placed in MMIO for software to configure independently. In other embodiments an intermediate tag type may be defined which later maps to an RMID/CLOS pair (or similar monitoring/allocation pair). In other embodiments the monitoring/allocation tags may be combined.

Embodiments may include a common table format across all RCS-Enumerated MMIO. In embodiments, an MMIO table format, fields, etc. may be as described as follows.

As shown for example in table 300I, RMID/CLOS may be defined as separate MMIO blocks, in other embodiments they may be 1: 1 interleaved.

Note that the RCS::REGW field indicates the register access width of the fields, either 2B or 8B.

Note that the base of the RMID and CLOS fields are enumerated in the RCS, and the size of these fields varies with the number of supported channels. The set of configurable RMIDs and CLOSs are organized as contiguous blocks of 4B registers.

The "PQR" fields starting at the enumerated offset (RCS :: CLOS Block Offset) are defined with enumerated register field spacing of RCS::REGW, which may require either 2B or 8B register accesses. A block of CLOS registers exists, followed by a block of RMID registers, indexed per channel. That is, setting a value in the IO_PQR_CLOS0 field will specify the CLOS to be used for channel[0] on this RCS.

The valid field width for RMID and CLOS is defined via CPUID leaves for shared-L3 configuration.

Higher offsets allow multiple channels to be programmed (above channel 0) if supported. Given that PCIe supports multiple VCs, multiple channels may be supported in the case of PCIe links, but CXL links support only two entries, one at IA_PQR_CLOS0 and one at IO_PQR_RMID0 in this table.

The RMID and CLOS fields are interpreted as numeric tags, exactly as they are in the CPU agent RDT feature set, and software may assign RMIDs, and CLOS as needed.

Software may reconfigure RMID and CLOS field values at any point during runtime, and values may be read back at any time. As all architectural CPU agent RDT infrastructure is also dynamically reconfigurable, this enables control loops to work across the capabilities sets collaboratively and consistently.

The following describes software architecture considerations, programming guidelines, recommended usage flows, related considerations for RDT features for non-CPU agents according to embodiments, which may build upon the architectural concepts and software usage examples discussed above.

In embodiments, software seeking to use RDT for non-CPU agents may have a number of tasks to comprehend. For example:
- Enumeration of the capabilities of RDT for CPU agents (through CPUID) and RDT for non-CPU agents (through CPUID and ACPI).
- Reservation of (or comprehension of the sharing implications of using) RMIDs and CLOS from the pools available at each resource level and subject to the RMID and CLOS management best practices on a particular processor.
- Pre-configuration of any resource limits to be used for modulating device activity, such as a cache mask for a CLOS intended to be used with a device.
- Configuration of each device's tagging properties through the MMIO interface described by the ACPI structures, such as associating a device with a particular RMID, CLOS and bandwidth limit, as applicable.
- Enabling the RDT features for non-CPU agents through the enable MSR infrastructure -- the IA32_L3_IO_QoS_CFG MSR, at MSR address 0xC83.
- Periodically adjusting resource limits subject to software policies and any control loops which may be present.
- Comprehending the implications of Sub-NUMA (non-uniform memory access) clustering (SNC) if present and enabled.

### Example apparatuses, methods, etc.

According to some examples, an apparatus (e.g., a processing system) includes an input/output agent and a processor core to provide a quality of service feature for use by the input/output agent.

According to some examples, a processing device (e.g., a processor core, and execution core, a processor, a system, an SoC, etc.) includes execution circuitry to execute a plurality of software threads; hardware to control monitoring or allocating, among the plurality of software threads, one or more shared resources; and configuration storage to enable the monitoring or allocating of the one or more shared resources among the plurality of software threads and one or more channels through which one or more devices are to be connected to the one or more shared resources.

Any such examples may include any or any combination of the following aspects. The configuration storage is also to associate quality of service tags with the plurality of software threads for the monitoring or allocating the one or more shared resources among the plurality of software threads and wherein the one or more channels are also to be associated with quality of service tags for monitoring or allocating the one or more shared resources among the one or more channels. The quality of service tags include resource monitoring identifiers. The quality of service tags include class of service values. The one or more shared resources include a shared cache. The one or more shared resources include bandwidth to a memory. The one or more devices include one or more input/output devices. The one or more devices include one or more accelerators. The one or more devices include a Peripheral Component Interconnect Express device. The one or more devices include a Compute Express Link device. The one or more channels are to be mapped to the one or more devices with one or more Advanced Configuration and Power Interface data structures. The configuration storage is also to associate quality of service tags with the one or more channels.

According to some examples, a method includes enabling, by programming configuration storage in a processing device, monitoring or allocating of one or more shared resources among a plurality of software threads and one or more channels through which one or more devices are to be connected to the one or more shared resources; and controlling the monitoring or allocating of the one or more shared resources among the plurality of software threads and the one or more channels during execution of the plurality of software threads by the processing device.

Any such examples may include any or any combination of the following aspects. The method includes associating, by programming the configuration storage in the processing device, quality of service tags with the plurality of software threads for the monitoring or allocating the one or more shared resources among the plurality of software threads, wherein the one or more channels are also to be associated with quality of service tags for monitoring or allocating the one or more shared resources among the one or more channels. The quality of service tags include resource monitoring identifiers or class of service values. The one or more shared resources include a shared cache or bandwidth to a memory. The one or more devices include one or more input/output devices, one or more accelerators, one or more Peripheral Component Interconnect Express devices, or one or more Compute Express Link devices. The method includes mapping the one or more channels to the one or more devices by configuring one or more Advanced Configuration and Power Interface data structures.

According to some examples, a system includes one or more input/output devices; and a processing device including execution circuitry to execute a plurality of software threads; hardware to control monitoring or allocating, among the plurality of software threads, one or more shared resources; and configuration storage to enable the monitoring or allocating of the one or more shared resources among the plurality of software threads and one or more channels through which the one or more input/output devices are to be connected to the one or more shared resources.

Any such examples may include any or any combination of the following aspects. The one or more input/output devices include one or more Peripheral Component Interconnect Express devices or one or more Compute Express Link devices. The configuration storage is also to associate quality of service tags with the plurality of software threads for the monitoring or allocating the one or more shared resources among the plurality of software threads and wherein the one or more channels are also to be associated with quality of service tags for monitoring or allocating the one or more shared resources among the one or more channels. The quality of service tags include resource monitoring identifiers. The quality of service tags include class of service values. The one or more shared resources include a shared cache. The one or more shared resources include bandwidth to a memory. The one or more channels are to be mapped to the one or more devices with one or more Advanced Configuration and Power Interface data structures. The configuration storage is also to associate quality of service tags with the one or more channels.

Any such examples may include any or any combination of the aspects described above or below and/or illustrated in the Figures.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a method may include any method performable by an apparatus according to an embodiment; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

Example Core Architectures - In-order and out-of-order core block diagram.

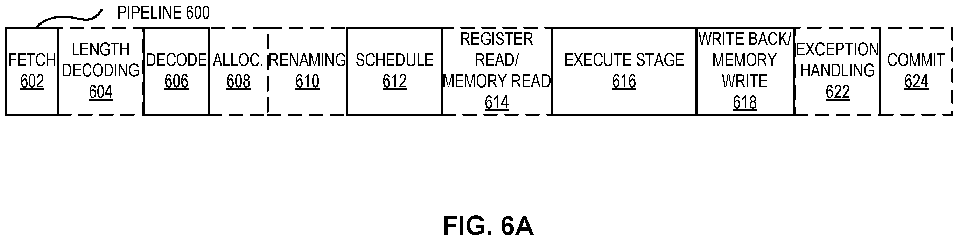

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

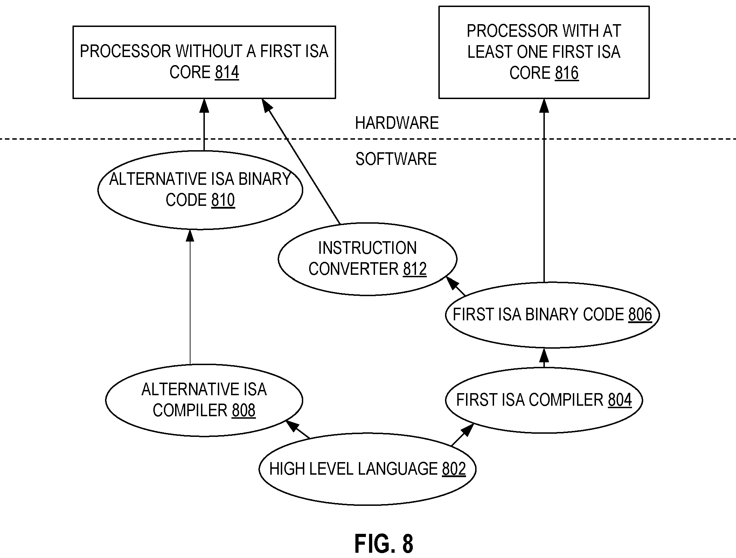

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel^{®} processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. A processing device comprising:
execution circuitry to execute a plurality of software threads;
hardware to control monitoring or allocating, among the plurality of software threads, one or more shared resources; and
configuration storage to enable the monitoring or allocating of the one or more shared resources among the plurality of software threads and one or more channels through which one or more devices are to be connected to the one or more shared resources.

2. The processing device of claim 1, wherein the configuration storage is also to associate quality of service tags with the plurality of software threads for the monitoring or allocating of the one or more shared resources among the plurality of software threads and wherein the one or more channels are also to be associated with quality of service tags for the monitoring or allocating of the one or more shared resources among the one or more channels.

3. The processing device of claim 2, wherein the quality of service tags include resource monitoring identifiers or class of service values.

4. The processing device of any of claims 1-3, wherein the one or more shared resources include a shared cache or bandwidth to a memory.

5. The processing device of any of claims 1-4, wherein the one or more devices include one or more input/output devices, accelerators, a Peripheral Component Interconnect Express devices, or Compute Express Link devices.

6. The processing device of any of claims 1-5, wherein the one or more channels are to be mapped to the one or more devices with one or more Advanced Configuration and Power Interface data structures.

7. The processing device of any of claims 1-6, wherein the configuration storage is also to associate quality of service tags with the one or more channels.

8. A method comprising:
enabling, by programming configuration storage in a processing device, monitoring or allocating of one or more shared resources among a plurality of software threads and one or more channels through which one or more devices are to be connected to the one or more shared resources; and
controlling the monitoring or allocating of the one or more shared resources among the plurality of software threads and the one or more channels during execution of the plurality of software threads by the processing device.

9. The method of claim 8, further comprising associating, by programming the configuration storage in the processing device, quality of service tags with the plurality of software threads for the monitoring or allocating of the one or more shared resources among the plurality of software threads, wherein the one or more channels are also to be associated with quality of service tags for the monitoring or allocating of the one or more shared resources among the one or more channels.

10. The method of claim 9, wherein the quality of service tags include resource monitoring identifiers or class of service values.

11. The method of any of claims 8-10, wherein the one or more shared resources include a shared cache or bandwidth to a memory.

12. The method of any of claims 8-11, wherein the one or more devices include one or more input/output devices, one or more accelerators, one or more Peripheral Component Interconnect Express devices, or one or more Compute Express Link devices.

13. The method of any of claims 8-12, further comprising mapping the one or more channels to the one or more devices by configuring one or more Advanced Configuration and Power Interface data structures.

14. A system comprising:
one or more input/output devices; and
a processing device including
execution circuitry to execute a plurality of software threads;
hardware to control monitoring or allocating, among the plurality of software threads, one or more shared resources; and
configuration storage to enable the monitoring or allocating of the one or more shared resources among the plurality of software threads and one or more channels through which the one or more input/output devices are to be connected to the one or more shared resources.

15. The system of claim 14, wherein the one or more input/output devices include one or more Peripheral Component Interconnect Express devices or one or more Compute Express Link devices.
